(19) Europäisches Patentamt
European Patent Office
Office européen des brevets

(11) **EP 4 116 845 A1**

(12) **EUROPEAN PATENT APPLICATION**

(43) Date of publication:
**11.01.2023 Bulletin 2023/02**

(21) Application number: **22169037.3**

(22) Date of filing: **20.04.2022**

(51) International Patent Classification (IPC):
**G06F 17/11** (2006.01)   **G06F 30/00** (2020.01)
**G06N 10/00** (2022.01)

(52) Cooperative Patent Classification (CPC):
**G06F 17/11; G06F 30/00; G06N 10/00**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.07.2021   JP 2021114531**

(71) Applicant: **FUJITSU LIMITED
Kawasaki-shi, Kanagawa 211-8588 (JP)**

(72) Inventor: **DOI, Shuuichi
Kawasaki-shi, Kanagawa, 211-8588 (JP)**

(74) Representative: **Hoffmann Eitle
Patent- und Rechtsanwälte PartmbB
Arabellastraße 30
81925 München (DE)**

(54) **MODEL GENERATION PROGRAM, MODEL GENERATION METHOD, AND INFORMATION PROCESSING APPARATUS**

(57) A model generation program that causes a computer to execute a process includes generating a plurality of first coefficient matrixes representing a relationship between a first observation matrix that has a feature and a characteristic vector that has a characteristic value of each of the plurality by a regression coefficient; generating a histogram in which a plurality of total regression coefficients obtained by totaling the regression coefficient included in the plurality of first coefficient matrixes for each of the plurality of elements is arranged in order of element in the first observation matrix; generating a second observation matrix including a second element acquired by combining a plurality of first elements that corresponds to the adjacent total regression coefficients of nonzero in the histogram into one; and generating a second coefficient matrix representing a relationship between the second observation matrix and the characteristic vector.

FIG. 1

EP 4 116 845 A1

**Description**

FIELD

The embodiments discussed herein are related to a model generation program, a model generation method, and an information processing apparatus.

BACKGROUND

With the progress of measurement technology, a large amount of complex analytical data (e.g., spectral data, image data, etc.) related to a specimen (sample) such as a substance, material, or the like has been generated. With the analytical data increased, it becomes difficult for an analyst with specialized knowledge to analyze all of the analytical data one by one. Furthermore, the analysis by the analyst is eventually based on the subjective point of view and preconceptions of the expert as the analyst. As a result, useful information may be overlooked due to lack of information caused by the analysis using only a small part of the large amount of data or no finding of a solution in an area beyond the knowledge of the expert.

As a method that does not depend on such subjective point of view and preconceptions of the analyst, there is a method of "sparse modeling" that extracts only essential elements from a large amount of data to create a prediction model. In addition, "regularization learning" that correlates a relationship between analytical data of a sample and characteristics using the method of "sparse modeling" has started to be utilized.

A typical regularization method used for the regularization learning is L1 regularization. The L1 regularization reduces the sum of absolute values of coefficients of the extracted elements, and in optimization calculation thereof, a penalty occurs when the sum of the absolute values of the coefficients of the extracted elements becomes large. By using the regularization learning utilizing the L1 regularization, it becomes relatively easy to objectively and automatically extract elements closely related to characteristics from analytical data related to a sample.

As a technique related to the sparse modeling, for example, an optimization device that performs sparse estimation with high accuracy and high speed has been proposed. In addition, there has also been proposed an image quality improving device in which a learning-type image quality improving method using sparse representation is put to practical use.

Japanese Laid-open Patent Publication No. 2020-095397 and International Publication Pamphlet No. WO 2015/064672 are disclosed as related art.

SUMMARY

[TECHNICAL PROBLEM]

The L1 regularization eases constraints of L0 regularization used as a strict definition of regularization. Accordingly, when the L1 regularization is used, it may not be possible to narrow down solutions sufficiently at a time of extracting elements from analytical data, or may not be possible to obtain a solution in a case where the analytical data contains noise. Thus, the L1 regularization may lack rigor.

The strict definition of regularization is the L0 regularization that minimizes the elements to be extracted. With the regularization learning using the L0 regularization, it becomes possible to objectively and automatically extract elements closely related to characteristics from analytical data related to a sample. In this case, optimization is performed using the definition of the regularization itself, it is possible to extract the elements accurately.

However, while the L0 regularization is superior to the L1 regularization in narrowing down the elements and optimizing the coefficients for the extracted elements, it is highly sensitive to data characteristics. Accordingly, in a case where resolution of an analysis spectrum to be input is too high, for example, model accuracy may decrease. For example, when the resolution is too high, the extracted element spans a plurality of adjacent elements. In this case, at a time of generation a model with conditions changed according to the cross-validation or the like, the position of the extracted element and magnitude of a regression coefficient deviate for each attempt of model generation. As a result, accuracy of a finally generated model decreases.

In one aspect, the present case aims to improve accuracy of a model generated by L0 regularization.

[SOLUTION TO PROBLEM]

According to an aspect of the embodiments, a model generation program that causes at least one computer to execute a process, the process includes generating, by cross-validation of first L0 regularization learning, a plurality of first coefficient matrixes representing a relationship between a first observation matrix that has a feature obtained by observing a plurality of elements of each of a plurality of samples as a component and a characteristic vector that has a characteristic value of each of the plurality of samples as a component by a regression coefficient that corresponds to each of the plurality of elements; generating a histogram in which a plurality of total regression coefficients obtained by totaling the regression coefficient included in the plurality of first coefficient matrixes for each of the plurality of elements is arranged in order of element in the first observation matrix; generating a second observation matrix including a second element acquired by combining a plurality of first elements that corresponds to the adjacent total regression coefficients of nonzero in the histogram into one based on the first observation matrix; and generating a second coefficient matrix representing a relationship between the second observation matrix and the characteristic vector.

## [ADVANTAGEOUS EFFECTS OF INVENTION]

According to one aspect, it becomes possible to improve accuracy of a model generated by L0 regularization.

## BRIEF DESCRIPTION OF DRAWINGS

FIG. 1 is a diagram illustrating an exemplary model generation method according to a first embodiment;
FIG. 2 is a diagram illustrating an exemplary system configuration according to a second embodiment;
FIG. 3 is a diagram illustrating exemplary hardware of a server;
FIG. 4 is a diagram illustrating an exemplary Ising machine;
FIG. 5 illustrates exemplary regularization learning;
FIG. 6 is a diagram illustrating an exemplary hyperparameter determination method based on cross-validation;
FIG. 7 is a diagram illustrating an exemplary element deviation caused by the cross-validation;
FIG. 8 is a block diagram illustrating exemplary functions of the server;
FIG. 9 is a diagram illustrating an outline of a model generation process involving element synthesis;
FIG. 10 is a flowchart (1/2) illustrating an exemplary procedure of a model generation process based on L0 regularization;
FIG. 11 is a diagram illustrating an observation spectrum of a sample used in calculation of L0 regularization;
FIG. 12 is a flowchart illustrating an exemplary procedure of a cross-validation process;
FIG. 13 is a diagram illustrating exemplary cross-validation based on the L0 regularization;
FIG. 14 is a diagram illustrating an exemplary histogram of a total regression coefficient of a coefficient matrix;
FIG. 15 is a flowchart (2/2) illustrating an exemplary procedure of the model generation process based on the L0 regularization;
FIG. 16 is a diagram illustrating an exemplary element correspondence table;
FIG. 17 is a flowchart illustrating an exemplary procedure of a process of generating a reconstructed observation matrix;
FIG. 18 is a diagram illustrating an exemplary reconstructed observation matrix;
FIG. 19 is a diagram illustrating an exemplary observation spectrum indicated in the reconstructed observation matrix;
FIG. 20 is a flowchart illustrating an exemplary procedure of a final model generation process;
FIG. 21 is a diagram illustrating a difference in model accuracy depending on the presence or absence of observation vector reconstruction;
FIG. 22 is a diagram illustrating exemplary reconstruction of an observation matrix according to a third embodiment;
FIG. 23 is a flowchart illustrating an exemplary procedure of a model generation process based on L0 regularization according to the third embodiment;
FIG. 24 is a flowchart illustrating an exemplary procedure of a model generation process based on L0 regularization according to a fourth embodiment; and
FIG. 25 is a diagram illustrating an exemplary observation spectrum in which all zero component elements are deleted.

## DESCRIPTION OF EMBODIMENTS

Hereinafter, the present embodiments will be described with reference to the drawings. Note that each of the embodiments may be implemented in combination with a plurality of embodiments as long as no contradiction arises.

## [First Embodiment]

First, a first embodiment will be described.

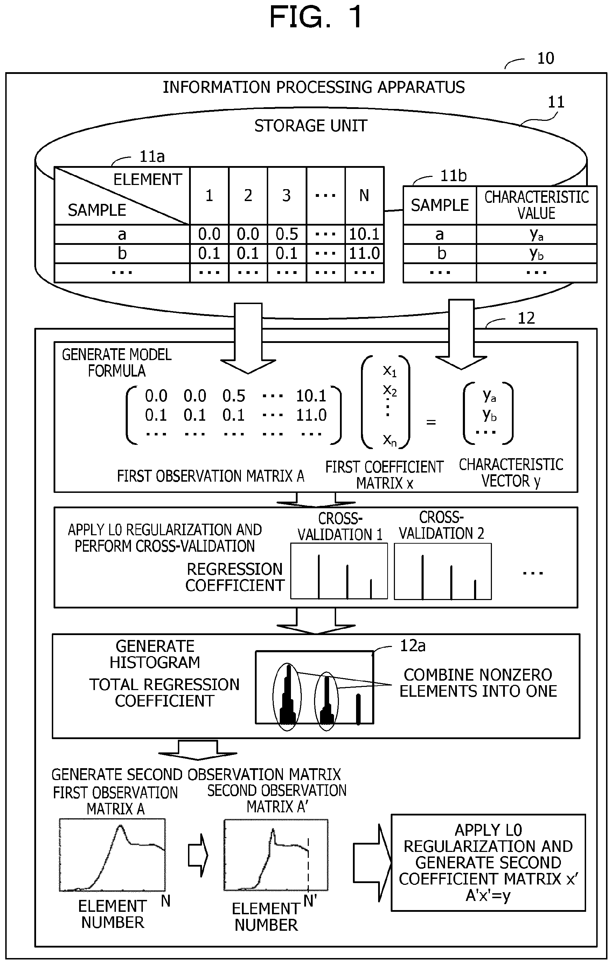

FIG. 1 is a diagram illustrating an exemplary model generation method according to the first embodiment. FIG.

1 illustrates an information processing apparatus 10 that implements the model generation method. The information processing apparatus 10 is capable of implementing the model generation method by executing a model generation program.

The information processing apparatus 10 includes a storage unit 11 and a processing unit 12. The storage unit 11 is, for example, a memory or a storage device included in the information processing apparatus 10. The processing unit 12 is, for example, a processor or an arithmetic circuit included in the information processing apparatus 10.

The storage unit 11 stores analytical data 11a and characteristic data 11b. The analytical data 11a is data indicating feature amounts obtained by multiple observations performed on each of a plurality of samples. The observation on a sample indicates, for example, observation of an X-ray absorption spectrum. In the observation of the X-ray absorption spectrum, energy of an incident X-ray is given as an element to be observed, and observation for each X-ray energy is carried out, thereby obtaining X-ray absorption intensity as a feature amount at the X-ray energy. The characteristic data 11b is data indicating a characteristic value of each of the plurality of samples. Another example of the observation is observation of an X-ray diffraction (XRD) spectrum. In the observation of the XRD spectrum, a diffraction angle is given as an element to be observed, and observation is carried out for each diffraction angle, thereby obtaining X-ray diffraction intensity as a feature amount at the diffraction angle.

In a case of estimating a characteristic value of a certain sample from a feature amount of the sample, it is sufficient if a relationship between the analytical data 11a and the characteristic data 11b is clarified. In that case, the relationship between the analytical data 11a and the characteristic data 11b is clarified by obtaining a first coefficient matrix x representing a relationship between a characteristic vector y and a first observation matrix A having the feature amounts obtained by multiple observations performed on each of the plurality of samples as components. Note that the first coefficient matrix x is a one-row matrix in the example of FIG. 1, which may also be called a coefficient vector.

By using the L0 regularization in solving the first coefficient matrix x, it becomes possible to objectively and automatically extract information closely related to the characteristics of the sample (feature amount observed under specific observation conditions). Learning of a model using the L0 regularization is a combination optimization problem, which may be implemented using an Ising machine by expressing it in a form of quadratic unconstrained binary optimization (QUBO).

Note that the L0 regularization is highly sensitive to data characteristics. Accordingly, in a case where the resolution of the observation when the input analytical data 11a is obtained is too high, the element closely related to the characteristic vector y may span a plurality of adjacent elements. In this case, in the final model, the magnitude of the regression coefficient or the position of the element extracted as closely related to the characteristics of the sample (element corresponding to a nonzero component in the first coefficient matrix x) may deviate. When the position of the extracted element or the magnitude of the regression coefficient deviates, the accuracy of the model represented by the calculated first coefficient matrix x decreases.

In view of the above, the processing unit 12 generates a model by the following procedure.

First, the processing unit 12 generates a model formula on the basis of the analytical data 11a and the characteristic data 11b. The model formula is, for example, a formula in which the first coefficient matrix x is multiplied from the right of the first observation matrix A and the result is the characteristic vector y. The first observation matrix A is a matrix generated on the basis of the analytical data 11a and having the feature amounts obtained by observing multiple elements of each of the plurality of samples as components. The characteristic vector y is a vector generated on the basis of the characteristic data 11b and having the characteristic value of each of the plurality of samples as a component. The first coefficient matrix x is a matrix representing the relationship between the first observation matrix A and the characteristic vector y using the regression coefficient corresponding to each of the plurality of elements.

Next, the processing unit 12 generates a plurality of the first coefficient matrixes x by the cross-validation of first L0 regularization learning on the basis of the model formula. The Ising machine capable of solving a combination optimization problem at high speed may also be used to solve the first L0 regularization.

After the cross-validation, the processing unit 12 generates a histogram 12a in which total regression coefficients obtained by totaling the regression coefficients included in the generated plurality of first coefficient matrixes x for each element are arranged in the order of the elements in the first observation matrix A. Moreover, the processing unit 12 generates a second observation matrix A' in which a plurality of adjacent first elements with the total regression coefficient of nonzero in the histogram 12a is combined into one second element on the basis of the first observation matrix A.

Then, the processing unit 12 generates a second coefficient matrix x' representing a relationship between the second observation matrix A' and the characteristic vector y. The second coefficient matrix x' is a model representing a relationship between the characteristic value and the observation result for each element of the sample. For example, the processing unit 12 generates the second coefficient matrix x' by second L0 regularization learning. Solution of the second L0 regularization learning may be calculated at high speed using the Ising machine, for example.

In this manner, with the adjacent elements determined to be closely related to the characteristics by the L0 regularization in the cross-validation combined into one, deviation of the position of the element extracted in the final model is suppressed. As a result, the accuracy of the generated model is improved. In addition, with the adjacent elements having the same tendency with respect to the characteristics combined into one, noise immunity of the L0 regularization calculation is improved.

Moreover, by performing the model generation based on the method illustrated in FIG. 1, it becomes possible to extract elements representing information more essential than ever before under the condition of obtaining a large amount of analytical data (e.g., high-resolution spectral data) observed under slightly different observation conditions at an accelerated pace. With the elements representing the essential information extracted, the accuracy of the generated model is improved.

Furthermore, combining the adjacent elements determined to be closely related to the characteristics by the L0 regularization in the cross-validation into one also exerts an effect of reducing the size of the observation matrix. With the size of the observation matrix reduced, it becomes possible to save the number of bits used by the Ising machine at the time of calculating the L0 regularization with the Ising machine. As a result, it becomes possible to reduce the calculation cost.

Note that the processing unit 12 may use the regression coefficient of the first coefficient matrix x corresponding to the first element to generate the component of the second element. For example, the processing unit 12 weights each component of the plurality of first elements by the corresponding total regression coefficient. Specifically, for example, in a case where the first element is an element in a row a (a is an integer of 1 or more) of the first observation matrix A, the processing unit 12 multiplies the value of the total regression coefficient, which is the sum of the a-th regression coefficients of the plurality of first coefficient matrixes x, by the component of the first element.

Then, the processing unit 12 totals the weighted components of the plurality of first elements for each of the plurality of samples. The processing unit 12 generates the component of the second element on the basis of the total value for each of the plurality of samples. For example, the processing unit 12 sets a value obtained by dividing the sum of the values of the weighted components of the plurality of first elements by the sum of the total regression coefficients corresponding to the plurality of respective first elements as a component of the second element.

In this manner, it is possible to calculate the component of the second element highly accurately by performing weighting with the total regression coefficient at the time of generating the component of the second element. As a result, it becomes possible to improve the accuracy of the finally generated model.

Furthermore, the processing unit 12 is capable of determining a value of a hyperparameter $\lambda$ indicating intensity of the regularization in the first L0 regularization learning by the cross-validation. For example, the processing unit 12 performs the cross-validation using the first formula using each of a plurality of candidate values of the hyperparameter $\lambda$ included in the first formula. The processing unit 12 selects one of the plurality of candidate values on the basis of the accuracy of the solution of the first formula. For example, the processing unit 12 selects the candidate value at the time when the most accurate validation result is obtained in the cross-validation. In a case where the cross-validation is performed for each candidate value of the hyperparameter $\lambda$ in this manner, the processing unit 12 determines a plurality of coefficient matrixes x generated by the cross-validation performed using the selected candidate value as a plurality of first coefficient matrixes x to be used to generate the histogram 12a. As a result, it becomes possible to generate the highly accurate histogram 12a, and to improve the accuracy of the finally generated model.

Furthermore, the processing unit 12 may also combine consecutive elements with the total regression coefficient of zero in the histogram 12a into one. For example, the processing unit 12 combines a plurality of adjacent first elements with the total regression coefficient of nonzero in the histogram 12a into one second element on the basis of the first observation matrix A. Moreover, the processing unit 12 combines a plurality of adjacent third elements with the total regression coefficient of zero in the histogram 12a into one fourth element. As a result, for the first observation matrix A, the second observation matrix A' including the second element obtained by combining the plurality of first elements and the fourth element obtained by combining the plurality of third elements is generated.

With the consecutive elements with the total regression coefficient of zero combined into one, the number of elements in the second observation matrix A' is reduced. As a result, the calculation amount for the L0 regularization in model generation using the second observation matrix A' is reduced, and the number of bits used in the Ising machine is also reduced.

Note that the processing unit 12 is capable of determining the number of the third elements to be combined into the fourth element according to the number of the first elements combined into the second element. For example, the processing unit 12 sets the number same as the average value of the numbers of the plurality of first elements combined into one second element as the number of the plurality of third elements to be combined into one fourth element. As a result, it becomes possible to evenly compress the entire first observation matrix A so that the fineness of the observation conditions of the observation results indicated in the second observation matrix A' is made uniform, whereby it becomes possible to suppress deterioration in the model accuracy caused by the variation in the fineness of the observation conditions.

Furthermore, the processing unit 12 may also delete all the elements with the total regression coefficient of zero in the histogram 12a. For example, the processing unit 12 combines a plurality of adjacent first elements with the total value of nonzero in the histogram 12a into one second element on the basis of the first observation matrix A.

Moreover, the processing unit 12 deletes the elements with the total value of zero in the histogram 12a from the first observation matrix A, thereby generating the second observation matrix A'.

In this manner, with all the elements with the total regression coefficient of zero in the histogram 12a deleted, it is not needed to perform the L0 regularization in the model generation process using the second observation matrix A'. For example, the processing unit 12 generates the second coefficient matrix x' by a least squares method. This makes it possible to improve processing efficiency.

[Second Embodiment]

Next, a second embodiment will be described. The second embodiment is an exemplary system using an Ising machine that calculates a combination of values of each state variable in which a value of an objective function is minimized. In the Ising machine, a problem to be solved is represented by an Ising model, and a combination of bit values that minimizes the energy of the Ising model is searched for. A formula for calculating the energy of the Ising model (Hamiltonian) is the objective function.

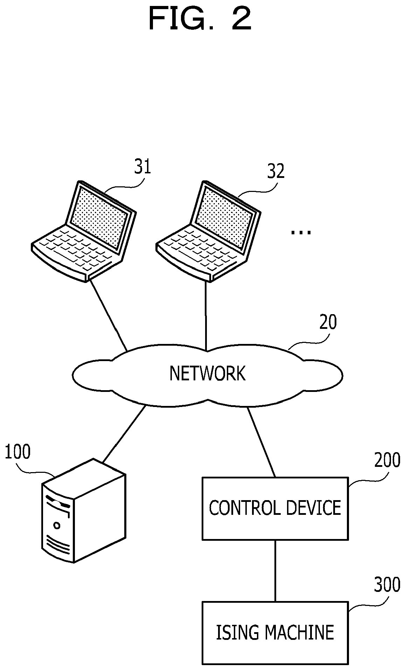

FIG. 2 is a diagram illustrating an exemplary system configuration according to the second embodiment. Terminal devices 31, 32, and so on, and a control device 200 are connected to a server 100 via a network 20. The terminal devices 31, 32, and so on are computers used by a user who requests L0 regularization learning. The server 100 receives a request for the L0 regularization learning from the terminal devices 31, 32, and so on, and generates a model formula on the basis of control data and analytical data of a sample to be subject to the L0 regularization learning. Moreover, the server 100 requests the control device 200 to solve a combination optimization problem for the L0 regularization learning of the generated model formula.

The control device 200 generates a formula in a QUBO format for solving the model formula generated by the server 100 using L0 regularization. Then, the control device 200 controls an Ising machine 300 to cause the Ising machine 300 to solve the combination optimization problem of the bit values included in the QUBO format.

The Ising machine 300 simulates a state transition of the Ising model corresponding to the formula in the QUBO format using a digital circuit on the basis of the control from the control device 200, and searches for the minimum value of the energy. The combination of the bit values at the time when the energy becomes the minimum value is the value of each bit included in the formula in the QUBO format, and a model representing a result of the L0 regularization learning is generated on the basis of the bit value.

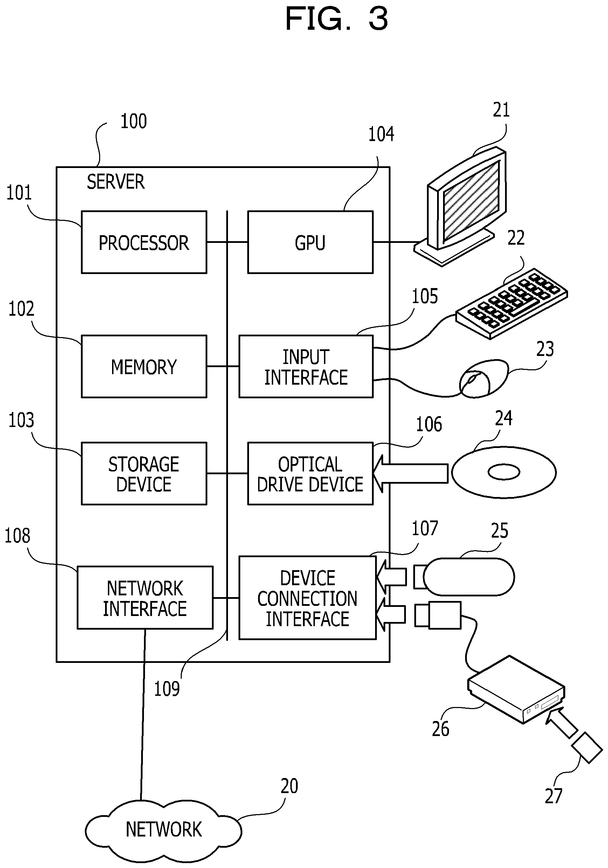

FIG. 3 is a diagram illustrating exemplary hardware of a server. The entire server 100 is controlled by a processor 101. A memory 102 and multiple peripheral devices are connected to the processor 101 via a bus 109. The processor 101 may also be a multiprocessor. The processor 101 is, for example, a central processing unit (CPU), a micro processing unit (MPU), or a digital signal processor (DSP). At least a part of functions implemented by the processor 101 executing a program may also be implemented by an electronic circuit. Examples of the electronic circuit that implements the functions of the processor 101 include an application specific integrated circuit (ASIC), a programmable logic device (PLD), a field-programmable gate array (FPGA), and the like.

The memory 102 is used as a main storage device of the server 100. The memory 102 temporarily stores at least a part of a program of an operating system (OS) and an application program to be executed by the processor 101. Furthermore, the memory 102 stores various types of data to be used in processing by the processor 101. As the memory 102, for example, a volatile semiconductor storage device such as a random access memory (RAM) is used.

The peripheral devices connected to the bus 109 include a storage device 103, a graphics processing unit (GPU) 104, an input interface 105, an optical drive device 106, a device connection interface 107, and a network interface 108.

The storage device 103 electrically or magnetically performs data writing/reading on a built-in recording medium. The storage device 103 is used as an auxiliary storage device of a computer. The storage device 103 stores an OS program, an application program, and various types of data. Note that, as the storage device 103, for example, a hard disk drive (HDD) or a solid state drive (SSD) may be used.

The GPU 104 is an arithmetic unit that performs image processing, and is also called a graphic controller. A monitor 21 is connected to the GPU 104. The GPU 104 causes an image to be displayed on a screen of the monitor 21 according to an instruction from the processor 101. Examples of the monitor 21 include a display device using an organic electro luminescence (EL), a liquid crystal display device, and the like.

A keyboard 22 and a mouse 23 are connected to the input interface 105. The input interface 105 transmits signals transmitted from the keyboard 22 and the mouse 23 to the processor 101. Note that the mouse 23 is an exemplary pointing device, and another pointing device may also be used. Examples of the another pointing device include a touch panel, a tablet, a touch pad, a track ball, and the like.

The optical drive device 106 uses laser light or the like to read data recorded in an optical disk 24 or write data to the optical disk 24. The optical disk 24 is a portable recording medium in which data is recorded to be readable by reflection of light. Examples of the optical disk 24 include a digital versatile disc (DVD), a DVD-RAM, a compact disc read only memory (CD-ROM), a CD-recordable (R)/rewritable (RW), and the like.

The device connection interface 107 is a communication interface for connecting peripheral devices to the server 100. For example, a memory device 25 and a memory reader/writer 26 may be connected to the device connection interface 107. The memory device 25 is a recording medium having a communication function with the device connection interface 107. The memory reader/writer 26 is a device that writes data in a memory card 27 or reads data from the memory card 27. The memory card 27 is a card-type recording medium.

The network interface 108 is connected to the network 20. The network interface 108 exchanges data with another computer or a communication device via the network 20. The network interface 108 is a wired communication interface connected to a wired communication device such as a switch or a router with a cable, for example. Furthermore, the network interface 108 may also be a wireless communication interface that is connected to and communicates with a wireless communication device such as a base station or an access point by radio waves.

The server 100 may implement a processing function of the second embodiment using the hardware as described above. Note that the information processing apparatus 10 indicated in the first embodiment may be implemented by hardware similar to the server 100 illustrated in FIG. 3.

The server 100 implements the processing function of the second embodiment by executing, for example, a program recorded in a computer-readable recording medium. The program in which processing content to be executed by the server 100 is described may be recorded in various recording media. For example, the program to be executed by the server 100 may be stored in the storage device 103. The processor 101 loads at least a part of the programs in the storage device 103 into the memory 102, and executes the program. Furthermore, the program to be executed by the server 100 may be recorded in a portable recording medium such as the optical disk 24, the memory device 25, or the memory card 27. The program stored in the portable recording medium may be executed after being installed in the storage device 103 under control of the processor 101, for example. Furthermore, the processor 101 may also read the program directly from the portable recording medium to execute it.

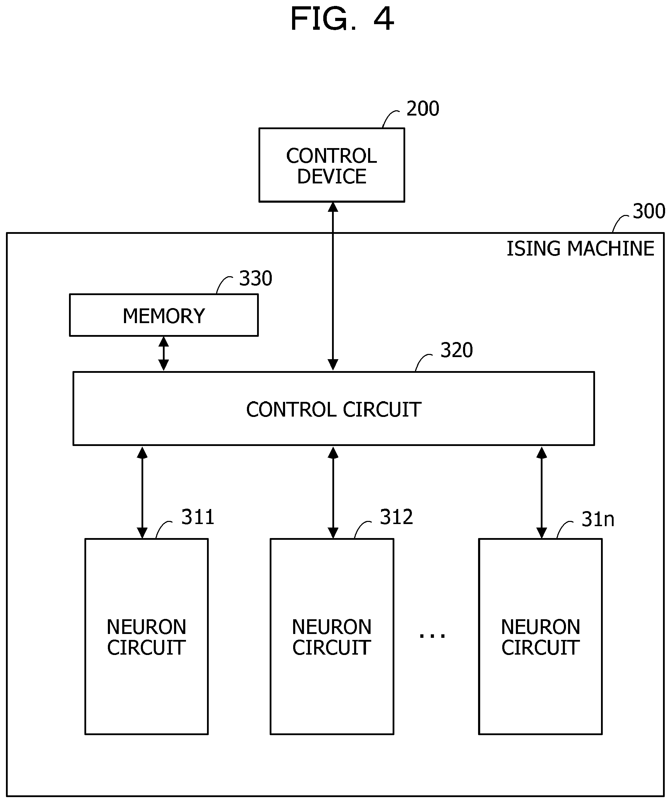

FIG. 4 is a diagram illustrating an exemplary Ising machine. The Ising machine 300 includes neuron circuits 311, 312, ..., and 31n, a control circuit 320, and a memory 330.

Each of the neuron circuits 311 to 31n calculates a first value based on the sum of the products of values of a plurality of weighting coefficients indicating whether or not they are connected to a plurality of neuron circuits other than themselves and a plurality of output signals of the plurality of other neuron circuits. Then, each of the neuron circuits 311 to 31n outputs a bit value of 0 or 1 on the basis of a comparison result between a threshold value and a second value obtained by adding a noise value to the first value.

The control circuit 320 performs initial setting processing of the Ising machine 300 and the like on the basis of information supplied from the control device 200. Moreover, after repeating processing of determining neurons to be updated a predetermined times, the control circuit 320 obtains a bit value of each neuron corresponding to the state variable of the Ising model retained in the memory 330, and transmits it to the control device 200 as a solution to the optimization problem.

The control circuit 320 may be implemented by an electronic circuit for a specific purpose, such as the ASIC or the FPGA, for example. Note that the control circuit 320 may also be a processor such as a CPU or a DSP. In that case, the processor performs the processing described above by executing a program stored in a memory (not illustrated).

The memory 330 retains, for example, a bit value of each neuron. The memory 330 may be implemented by, for example, a register, a RAM, or the like. The memory 330 may also retain a minimum value of energy and the bit value of each neuron at the time when the minimum value is obtained. In this case, after repeating processing of determining neurons to be updated a predetermined times, the control circuit 320 may also obtain, from the memory 330, the minimum value of the energy and the bit value of each neuron at the time when the minimum value is obtained to transmit them to the control device 200.

The server 100 is capable of performing regularization learning calculation using the Ising machine 300 illustrated in FIG. 4. Hereinafter, the regularization learning will be described.

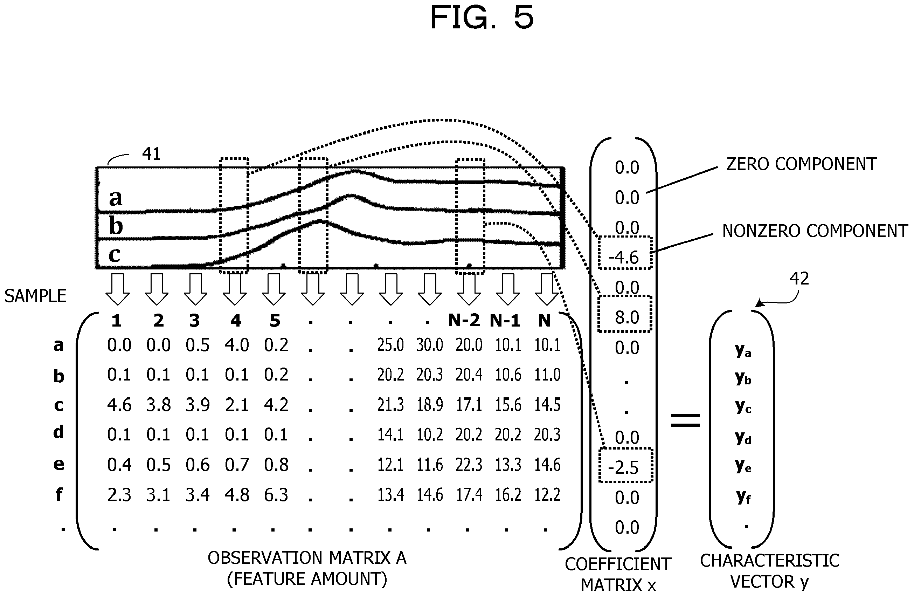

FIG. 5 illustrates exemplary regularization learning. FIG. 5 illustrates an example of extracting, from X-ray absorption spectrum data 41 associated with a plurality of samples (materials, devices, etc.), only the elements closely related to characteristics of the samples utilizing the regularization learning. In addition, characteristic data 42 indicating a characteristic value actually measured for each sample is prepared in advance.

The X-ray absorption spectrum data of the plurality of samples may be represented by an observation spectrum data matrix (observation matrix A). Each row of the observation matrix A corresponds to the sample. Each column of the observation matrix A corresponds to X-ray energy of the X-ray absorption spectrum. The X-ray energy is an element indicating an observation condition. A component of the observation matrix A is X-ray absorption intensity at the X-ray energy corresponding to the column in which the component is set in the sample corresponding to the row in which the component is set.

The observation matrix A is a matrix of M $\times$ N where the number of samples (or the number of analyses) is M (M is an integer of 1 or more) and the number of X-ray energies at which the X-ray absorption spectrum is observed is N (N is an integer of 1 or more). When the observation matrix A is expressed by a formula, which A is an element of $R^{M \times N}$ (R represents a real number). Each component of the observation matrix A is expressed as $a_{mn}$ (m is an integer of 1 or more and M or less, and n is an integer of 1 or more and N or less).

The characteristic data 42 is represented by a characteristic vector y. A component of the characteristic vector y is a characteristic value of each sample. The characteristic vector y has M components, and the characteristic vector y is expressed by a formula which y is an element of $R^M$. Each component of the characteristic vector y is represented by $y_m$.

A coefficient matrix x with few nonzero components is to be optimized using the L0 regularization. The coefficient matrix x is an unknown vector including N components. The coefficient matrix x is expressed by a formula which x is an element of $R^N$. Here, it is assumed that a relationship of a model formula "y = Ax" is established between the characteristic vector y and the observation matrix A. In this case, the problem to be solved is defined by the following formula (1).

[Numeral 1]

$$\min_{x} \left\{ \frac{1}{2} \|y - Ax\|_2^2 + \lambda \|x\|_p \right\} \qquad (1)$$

The formula (1) is a problem of seeking the coefficient matrix x that minimizes the expression in the parentheses. The first term "$\|y - Ax\|_2^2$" in the parentheses is the square of the L2 norm (Euclidean norm) of y - Ax. The second term "$\lambda \|x\|_p$" in the parentheses is a penalty term indicating Lp regularization. In the second term, "$\|x\|_p$" (p represents a real number of 0 or more) is the Lp norm of the coefficient matrix x. In the second term, $\lambda$ represents a hyperparameter that determines intensity of the regularization.

A typical regularization method used for the regularization learning is L1 regularization in which p = 1. The L1 regularization reduces the sum of the absolute values of the coefficients of the extracted elements (i.e., L1 norm). The penalty term of the formula (1) acts in such a manner that a penalty occurs when the sum of the absolute values of the element coefficients increases in the N elements. As a result of the regularization learning utilizing the L1 regularization, the coefficient matrix x having the nonzero regression coefficients only for a part of the N components is obtained. The elements of the observation matrix A corresponding to the nonzero components in the coefficient matrix x are closely related to the characteristics of the sample. With such regularization learning, it becomes possible to objectively and automatically extract the elements closely related to the characteristics from the analytical data related to the target sample relatively easily.

The biggest advantage of using the L1 regularization is that, since the present problem is a continuous optimization problem, it becomes possible to extract the elements at high speed by using various analytical algorithms. However, the original stringent definition of regularization is the L0 regularization in which p = 0, which acts to cause a penalty when the number of nonzero components increases in the N elements. Therefore, the L1 regularization is a method that eases the constraints of the L0 regularization. Accordingly, the L1 regularization may lack rigor, such as not being able to narrow down solutions sufficiently at the time of extracting the elements from the analytical data, or not being able to obtain a solution in a case where the analytical data contains noise.

On the other hand, when the L0 regularization, which is the original definition of regularization, is used, it is possible to extract, from the analytical data related to the sample, only the elements and information closely related to the characteristics not only objectively and automatically but also accurately and rigorously. The L0 regularization is classified as what is called a combination optimization problem indicating which element is to be used in which combination. Therefore, it is difficult to perform calculation with a computer such as a classical computer as the number of combinations is excessively large. Meanwhile, at present, the Ising machine 300 capable of solving a combination optimization problem using an Ising model has been in practical use. With the Ising machine 300 used, it becomes possible to execute calculation of the L0 regularization.

Note that, at a time of solving a problem with the Ising machine 300, the formula is subject to the QUBO and variables are assigned to bits. A bit scale of the L0 regularization problem is basically proportional to the number of elements N of the analysis spectrum.

In the regularization learning, it is common to determine a model obtained by solving the formula (1) by using the cross-validation method in statistics instead of making determination by inputting all the input data to seek a solution only once. For example, the server 100 divides the prepared analytical data, analyzes a part thereof first, and tests the analysis with the remaining part. Then, the server 100 approximates and checks how much the data analysis may actually deal with the population by the cross-validation while alternately verifying and checking the validity of the analysis result.

In the regularization learning, the hyperparameter $\lambda$ gives how much the regularization penalty is to be for the prepared data. In the regularization learning, the cross-validation is used to determine a value of the hyperparameter $\lambda$.

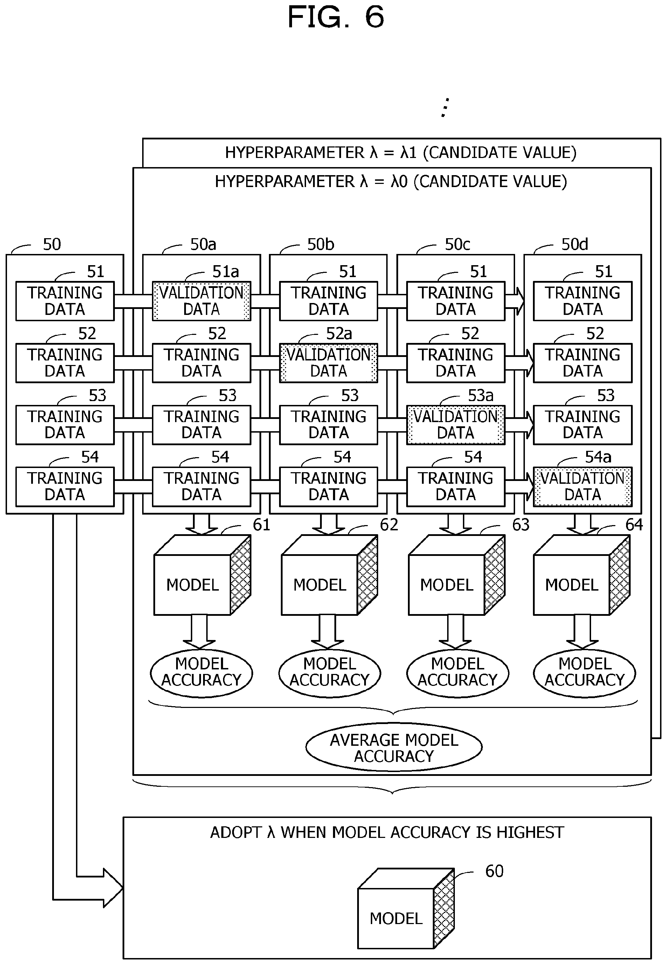

FIG. 6 is a diagram illustrating an exemplary hyperparameter determination method based on the cross-validation. In the example illustrated in FIG. 6, all training data 50 is divided into four training data 51 to 54. The server 100 generates multiple data sets 50a to 50d using one of the divided training data 51 to 54 as validation data and the other as training data. For example, in the data set 50a, the training data 51 is changed to validation data 51a. In the data set 50b, the training data 52 is changed to validation data 52a. In the data set 50c, the training data 53 is changed to validation data 53a. In the data set 50d, the training data 54 is changed to validation data 54a.

The server 100 performs regularization calculation using each of the four data sets 50a to 50d for each candidate value of the hyperparameter $\lambda$. For example, the server 100 generates four models 61 to 64 based on the respective four data sets 50a to 50d using a candidate value $\lambda0$ as the hyperparameter $\lambda$. The models 61 to 64 in the L0 regularization are the coefficient matrixes x.

The training data 52 to 54 are used to generate the model 61. The training data 51, 53, and 54 are used to generate the model 62. The training data 51, 52, and 54 are used to generate the model 63. The training data 51 to 53 are used to generate the model 64.

The server 100 verifies the accuracy of the generated models 61 to 64 using the validation data. The accuracy of the model 61 is validated using the validation data 51a. The accuracy of the model 62 is validated using the validation data 52a. The accuracy of the model 63 is validated using the validation data 53a. The accuracy of the model 64 is validated using the validation data 54a. In the validation of the models 61 to 64, the server 100 calculates, for example, a root mean squared error, a mean absolute error, or the like, thereby evaluating the accuracy of the models 61 to 64. In a case where the root mean squared error or the mean absolute error is calculated, the accuracy is higher as the value obtained by the calculation is smaller.

As described above, the cross-validation is a process of generating the models 61 to 64 for the respective data sets 50a to 50d in which the one to serve as validation data is replaced in the training data 51 to 54 and validating the accuracy of the generated models 61 to 64. In order to determine the hyperparameter $\lambda$, the server 100 obtains an average of the accuracy of the generated models for each candidate value of the hyperparameter $\lambda$, for example. Then, the server 100 specifies, on the basis of the average value of the values indicating accuracy, the candidate value of the hyperparameter $\lambda$ by which the most accurate model has been generated as an optimum value.

Thereafter, the server 100 uses the optimum value of the hyperparameter $\lambda$ to carry out the regularization calculation using the all training data 50 without division, and generates a model 60. The coefficient matrix x represented by the generated model 60 is output as a learning result.

Note that, while the example of FIG. 6 illustrates the cross-validation in which the all training data 50 is divided into four, in general, k-fold cross-validation (k is an integer) is used or leave-one-out cross validation is used in a case where the number of data is small. In the leave-one-out cross validation, only one sample data is used for validation data.

In this manner, it is possible to determine the intensity (hyperparameter $\lambda$) of the penalty term of the regularization of the formula (1) using the cross-validation. However, while the L0 regularization is superior to the L1 regularization in narrowing down the elements and optimizing the coefficients for the extracted elements, it is highly sensitive to data characteristics. Accordingly, in a case where the resolution of the input analysis spectrum is too high, the element closely related to the characteristic vector y may span a plurality of adjacent elements. In this case, the position of the extracted element and the magnitude of the regression coefficient deviate in the cross-validation for each of the data sets 50a to 50d or in the regularization calculation using the all training data 50. As a result, the model accuracy may decrease.

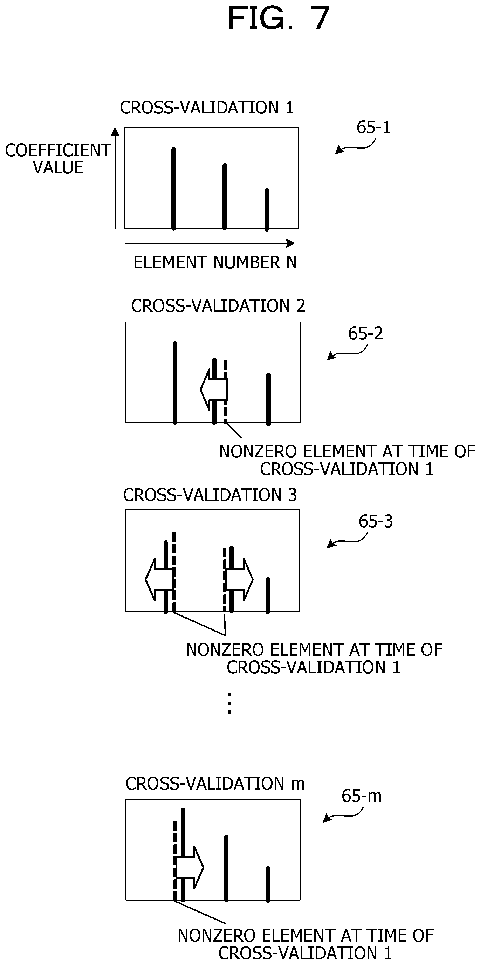

FIG. 7 is a diagram illustrating an exemplary element deviation caused by the cross-validation. The example of FIG. 7 illustrates m models 65-1, 65-2, 65-3, ..., and 65-m generated using m data sets (m is an integer of 2 or more) in the cross-validation. The models 65-1, 65-2, 65-3, ..., and 65-m are coefficient matrixes x with N elements. In the example of FIG. 7, each of the models 65-1, 65-2, 65-3, ..., and 65-m is represented by a graph in which the horizontal axis represents an element number of each element and the vertical axis represents a coefficient value of each element.

In the L0 regularization, the coefficient value is "0" for most elements. In addition, only a few elements have nonzero components. In the model 65-1, only three elements have nonzero components.

In the model 65-2 as well, only three elements have nonzero components. However, in the model 65-2, the element in the middle having the nonzero component (the second element from the lowest element number) is an element slightly to the left (element number is smaller) of the element in the middle in the model 65-1.

In the model 65-3 as well, only three elements have nonzero components. In the model 65-3, the element on the left side having the nonzero component (the first element from the lowest element number) is slightly to the left of the element on the left side in the model 65-1. In addition, in the model 65-3, the element in the middle having the nonzero component is slightly to the right (element number is larger) of the element in the middle in the model 65-1.

In the model 65-m as well, only three elements have nonzero components. In the model 65-m, the element on the left side having the nonzero component is an element slightly to the right of the element on the left side in the model 65-1.

When the multiple models 65-1, 65-2, 65-3, ..., and 65-m are generated by the cross-validation in this manner, the element number of the element of the coefficient value component may deviate for each model. This becomes more remarkable as the resolution of the input analysis spectrum becomes higher. The deviation of the element number of the element of the nonzero component causes deterioration in model accuracy.

Furthermore, too high resolution of the analysis spectrum may cause a decrease in calculation efficiency. For example, while the regularization calculation is executable at high speed using the Ising machine 300, the number of bits that may be used in one calculation by the Ising machine 300 is limited in terms of hardware. Meanwhile, the number of bits used in the L0 regularization calculation depends on the number of elements in the training data. For example, in a case of executing calculation of the L0 regularization directly for the data indicating the analysis spectrum measured by a device having extremely high resolution, a large number of bits are to be used. Accordingly, when the resolution is too high, the number of bits that may be used for one calculation by the Ising machine 300 may be exceeded so that the calculation of the L0 regularization may become inefficient.

In view of the above, the server 100 combines a plurality of elements in the observation matrix A into one, thereby evaluating and estimating the relationship between the observation matrix and the characteristic vector y accurately and improving the processing efficiency by saving the bits to be used.

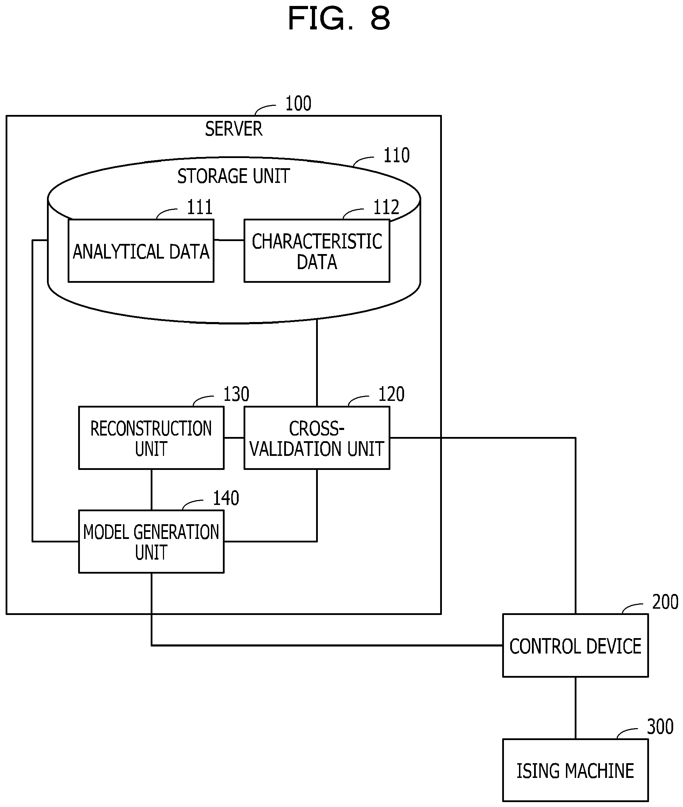

FIG. 8 is a block diagram illustrating exemplary functions of the server. The server 100 includes a storage unit 110, a cross-validation unit 120, a reconstruction unit 130, and a model generation unit 140.

The storage unit 110 stores analytical data 111 and characteristic data 112. The analytical data 111 is, for example, the X-ray absorption spectrum data 41 (see FIG. 5) for each of the plurality of samples. The characteristic data 112 is the characteristic data 42 (see FIG. 5) indicating the characteristic value of each of the plurality of samples.

The cross-validation unit 120 carries out the cross-validation using the analytical data 111 and the characteristic data 112 for each candidate value of the hyperparameter $\lambda$. The cross-validation unit 120 controls the Ising machine 300 via the control device 200, for example, thereby obtaining a model corresponding to the training data in the data set of the cross-validation from the Ising machine 300. The cross-validation unit 120 validates, using the validation data in the data set, the accuracy of the model obtained on the basis of the data set. Then, the cross-validation unit 120 determines the candidate value of the hyperparameter $\lambda$ at which the highest accuracy is obtained as a value of the hyperparameter $\lambda$ to be used for the final model generation.

The reconstruction unit 130 uses the result of the cross-validation by the cross-validation unit 120 to combine, among the elements adjacent in the element number, a plurality of elements satisfying a predetermined condition into one element. For example, the reconstruction unit 130 generates a histogram of the coefficient matrix x on the basis of the plurality of models generated in the cross-validation, and combines the consecutive elements of nonzero components into one element in the histogram.

The model generation unit 140 generates, using the analytical data 111 and the characteristic data 112, a model (coefficient matrix x) representing a relationship between the observation matrix A and the characteristic vector y on the basis of the L0 regularization. At this time, the model generation unit 140 treats the plurality of elements combined by the reconstruction unit 130 as one element. In addition, the model generation unit 140 uses the value determined by the cross-validation unit 120 as the hyperparameter $\lambda$ in the L0 regularization calculation. The model generation unit 140 controls the Ising machine 300 via the control device 200, for example, thereby obtaining a model corresponding to all training data from the Ising machine 300.

Note that the function of each element illustrated in FIG. 8 may be implemented by, for example, allowing the computer to execute a program module corresponding to the element.

In the server 100, the reconstruction unit 130 combines a plurality of elements into one element. Accordingly, the number of elements at the time of model generation in the model generation unit 140 is smaller than the number of elements at the time of cross-validation by the cross-validation unit 120. With the plurality of elements combined into one, the deviation of the nonzero component caused by excessively high resolution is suppressed.

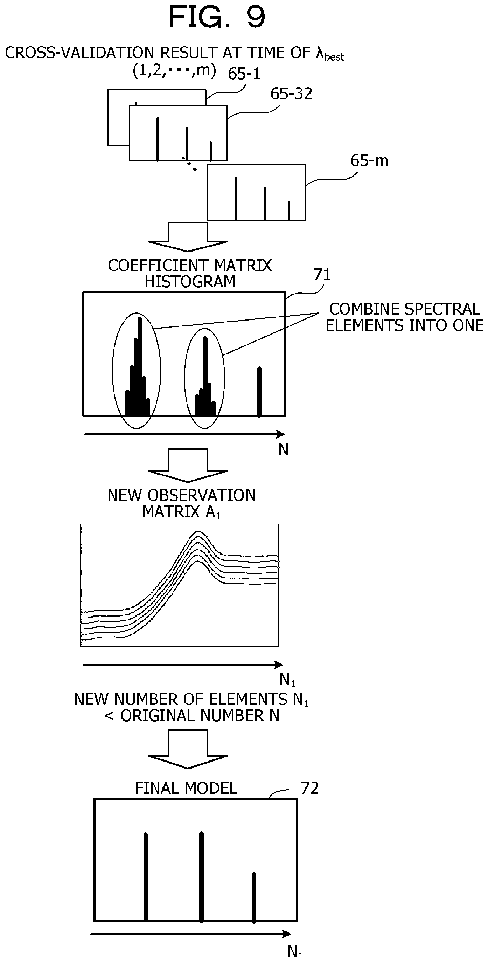

FIG. 9 is a diagram illustrating an outline of a model generation process involving element synthesis. The reconstruction unit 130 synthesizes elements by utilizing the coefficient matrix x (models 65-1, 65-2, ..., and 65-m) obtained by the cross-validation. For example, the reconstruction unit 130 obtains, from the cross-validation unit 120, the coefficient matrix x generated at the time of the cross-validation using a hyperparameter $\lambda_{best}$ by which the most accurate model has been obtained among the candidate values of the hyperparameter $\lambda$.

The coefficient matrix x obtained by the cross-validation includes the regression coefficients with the N number of elements in the original spectrum. The existing number is m, which is the number of attempts of the cross-validation (k for k-fold cross-validation, and the number of samples for leave-one-out cross validation). The reconstruction unit 130 adds the components (regression coefficients) of those coefficient matrixes x for each element, thereby creating a histogram 71 of the coefficient matrix.

In a case where the element closely related to the characteristic vector y spans a plurality of adjacent elements, the position of the element with the regression coefficient of a nonzero component tends to deviate, especially in the L0 regularization, for example. Accordingly, when the histogram 71 of the coefficient matrix x is created, a certain element and an element adjacent to it have a nonzero component. For example, the nonzero component is distributed in a plurality of consecutive elements. While it is possible to regard the center of the consecutive elements having the nonzero component as the element most closely related to the characteristic vector y, the reconstruction unit 130 adds the coefficient values of the consecutive elements having the nonzero component to combine them into one. This corresponds to generating one new spectral element from the original plurality of spectral elements.

In this manner, in the histogram 71 of the total regression coefficient, similar processing is performed on all the consecutive elements of nonzero components, thereby creating a new observation matrix (reconstructed observation matrix $A_1$). At this time, the number $N_1$ ($N_1$ is a natural number) of the spectral elements included in the reconstructed observation matrix $A_1$ is $N_1 < N$ with respect to the number N of the elements of the original spectrum.

Thereafter, the model generation unit 140 performs solution work of the L0 regularization on the reconstructed observation matrix $A_1$ using the optimum value of the hyperparameter $\lambda$ obtained by the cross-validation. This makes it possible to obtain a final coefficient matrix x' including $N_1$ regression coefficients and having a small number of nonzero components. The coefficient matrix x' obtained at this time becomes a final model 72 representing a relationship between the observation spectrum and the characteristics. The final model 72 obtained in this manner is superior to the case where the elements are not synthesized in the model accuracy such as the root mean squared error, the mean absolute error, or the like.

Next, a procedure of the model generation process based on the L0 regularization will be described in detail.

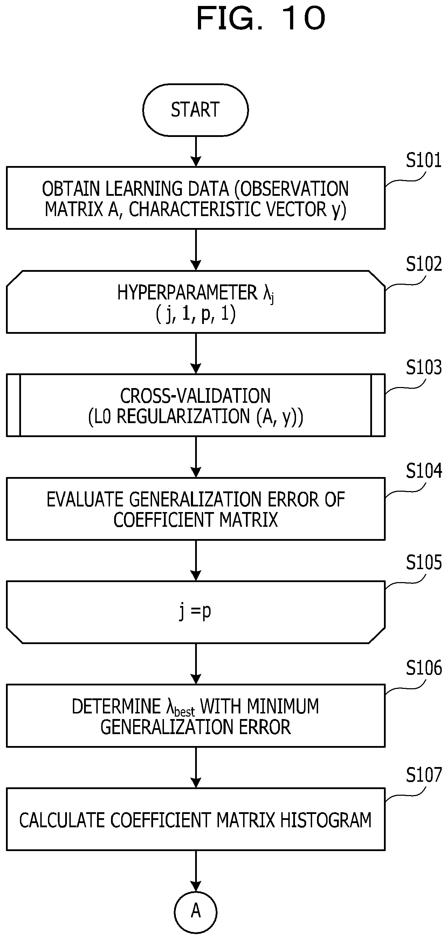

FIG. 10 is a flowchart (1/2) illustrating an exemplary procedure of the model generation process based on the L0 regularization. Hereinafter, a process illustrated in FIG. 10 will be described in accordance with step numbers.

[Step S101] The cross-validation unit 120 obtains learning data. For example, the cross-validation unit 120 obtains the analytical data 111 and the characteristic data 112 from the storage unit 110. The cross-validation unit 120 generates the observation matrix A on the basis of the analytical data 111. Furthermore, the cross-validation unit 120 generates the characteristic vector y on the basis of the characteristic data 112.

[Step S102] The cross-validation unit 120 executes the process of steps S103 to S104 for each of p (p is a natural number) candidate values (hyperparameter $\lambda_j$) of the hyperparameter $\lambda$. For example, the cross-validation unit 120 counts up the value of j by 1 in order from 1, and loops the process of steps S103 to S104 until j becomes p.

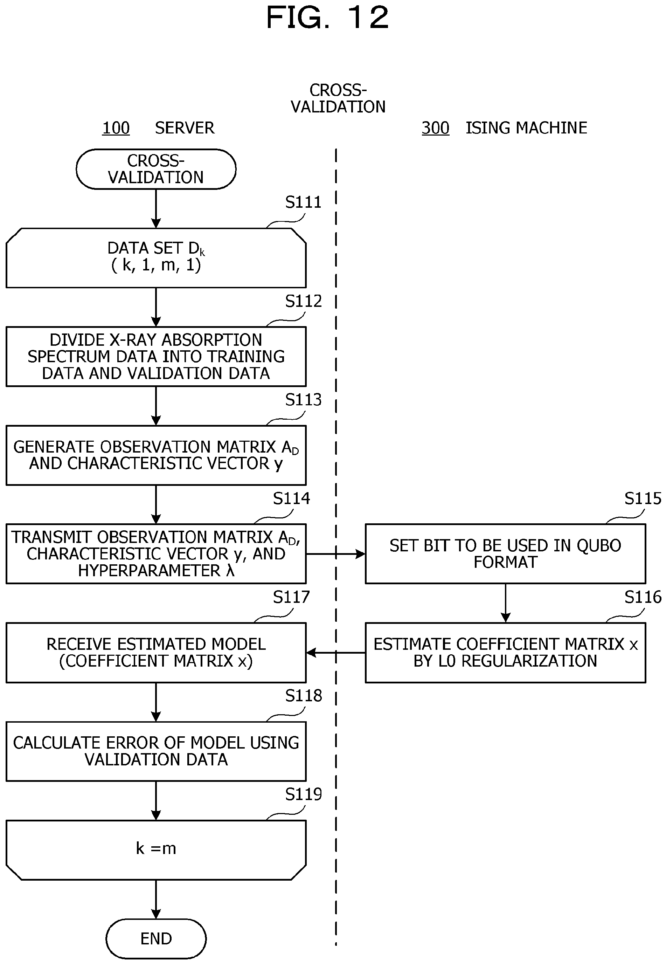

[Step S103] The cross-validation unit 120 executes a cross-validation process of the L0 regularization on the basis of the observation matrix A, the characteristic vector y, and the hyperparameter $\lambda_j$. Details of the cross-validation process will be described later (see FIG. 12). The coefficient matrix x is obtained by the cross-validation process.

[Step S104] The cross-validation unit 120 evaluates a generalization error of the coefficient matrix x. For example, the cross-validation unit 120 calculates the average of the root mean squared error or the mean absolute error of each of the plurality of models generated in the cross-validation as a generalization error.

[Step S105] When the cross-validation unit 120 has completed the cross-validation for all the candidate values of the hyperparameter $\lambda$, the process proceeds to step S106. For example, in a case of j = p, the cross-validation unit 120 determines that the cross-validation is complete for all the candidate values.

[Step S106] The cross-validation unit 120 determines the candidate value with the smallest generalization error among the candidate values of the hyperparameter $\lambda$ as the hyperparameter $\lambda_{best}$ to be adopted.

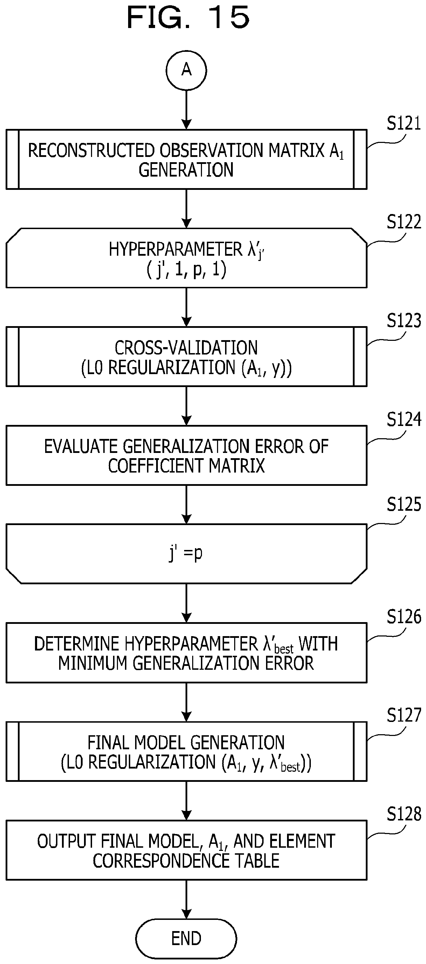

[Step S107] The reconstruction unit 130 calculates a histogram of the total regression coefficient on the basis of the coefficient matrix x obtained in the cross-validation at the time of the hyperparameter $\lambda_{best}$. For example, the reconstruction unit 130 totals, for each element, the regression coefficients of the plurality of coefficient matrixes x generated in the cross-validation at the time when the hyperparameter $\lambda_{best}$ is obtained. Then, the reconstruction unit 130 arranges the total regression coefficients in the order of the element number, thereby generating a histogram. Thereafter, the reconstruction unit 130 advances the process to step S121 (see FIG. 15).

According to the process illustrated in FIG. 10, the original observation matrix A is generated from the learning data, and the hyperparameter $\lambda_{best}$ with the minimum generalization error is determined by the cross-validation.

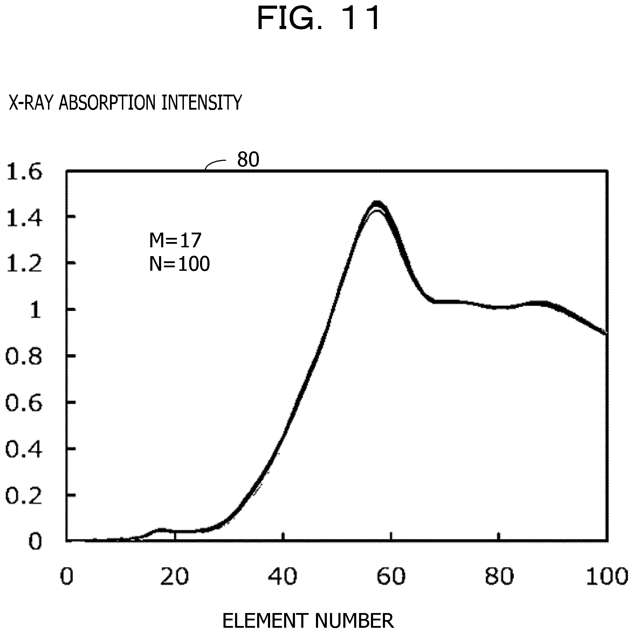

FIG. 11 is a diagram illustrating the observation spectrum of the sample used in the L0 regularization calculation. An observation spectrum 80 in FIG. 11 is an X-ray absorption spectrum. The horizontal axis represents an element number of an element included in the spectrum, and the vertical axis represents the observed X-ray absorption intensity. The total number M of the spectral data is "17". The number N of the elements included in the spectrum is "100". In this case, the observation matrix A is a matrix of $17 \times 100$.

The cross-validation as illustrated in FIG. 6 is carried out on the basis of the observation matrix A representing such an observation spectrum 80. Next, a procedure of the cross-validation process will be described in detail.

FIG. 12 is a flowchart illustrating an exemplary procedure of the cross-validation process. Hereinafter, a process illustrated in FIG. 12 will be described in accordance with step numbers.

[Step S111] The cross-validation unit 120 of the server 100 and the Ising machine 300 execute the process of steps S112 to S119 for each data set $D_k$ generated for the cross-validation. For example, the cross-validation unit 120 counts up k by 1 in order from 1 when the number of data sets to be generated is m. Then, the cross-validation unit 120 and the Ising machine 300 loop the process of steps S112 to S119 until k becomes m.

[Step S112] The cross-validation unit 120 divides the X-ray absorption spectrum data for each sample into training data and validation data. The validation data is the k-th training data of all training data. The training data is training data other than the k-th of all training data.

[Step S113] The cross-validation unit 120 generates an observation matrix AD on the basis of the training data. The observation matrix AD is obtained by deleting the row of the sample corresponding to the validation data from the observation matrix A. Furthermore, the cross-validation unit 120 generates the characteristic vector y on the basis of the characteristic value of the sample corresponding to the X-ray absorption spectrum data included in the training data.

[Step S114] The cross-validation unit 120 transmits the observation matrix $A_D$, the characteristic vector y, and the hyperparameter $\lambda$ to the control device 200. Then, the control device 200 controls the Ising machine 300 on the basis of the received information, and optimizes the coefficient matrix x.

[Step S115] The Ising machine 300 sets the initial value of the bit used in the L0 regularization formula in the QUBO format in the neuron circuit of each bit under the control of the control device 200. Furthermore, the Ising machine 300 sets, in the neuron circuit, information such as a weighting coefficient indicating whether or not the neuron circuits are connected to each other on the basis of the formula to be solved.

[Step S116] The Ising machine 300 estimates the coefficient matrix x by the L0 regularization. Specifically, for example, the Ising machine 300 reproduces the quantum phenomena with a digital circuit, thereby optimizing the combination of bit values by an annealing method. In the combinatorial optimization, a combination of bit values that minimizes energy is obtained under the condition that the energy based on each bit value becomes smaller as the value in the parentheses in the formula (1) becomes smaller. One component value (regression coefficient) of the coefficient matrix x is obtained on the basis of multiple bit values. For example, the value of each component of the coefficient matrix x that minimizes the inside of the parentheses in the formula (1) is obtained on the basis of each bit value that minimizes the energy. Note that a component in which all corresponding bit values are 0 is to be a zero component. The Ising machine 300 transmits the optimized coefficient matrix x to the server 100 via the control device 200.

[Step S117] The cross-validation unit 120 of the server 100 receives, from the Ising machine 300, the coefficient matrix x as an optimized model.

[Step S118] The cross-validation unit 120 calculates an error of the obtained coefficient matrix x (e.g., root mean squared error or mean absolute error) using the validation data. For example, the cross-validation unit 120 multiplies the vector whose component is the value of the absorption intensity of each X-ray energy of the X-ray absorption spectrum data indicated in the validation data by the coefficient matrix x from the right side. The cross-validation unit 120 sets the value of each component obtained as a result of the multiplication as a predicted characteristic value. The cross-validation unit 120 calculates the root mean squared error or the mean absolute error on the basis of the error of each component between the predicted characteristic value and the actual characteristic value indicated in the characteristic data. The accuracy of the coefficient matrix x generated as a model is indicated to be higher as the calculated error is smaller.

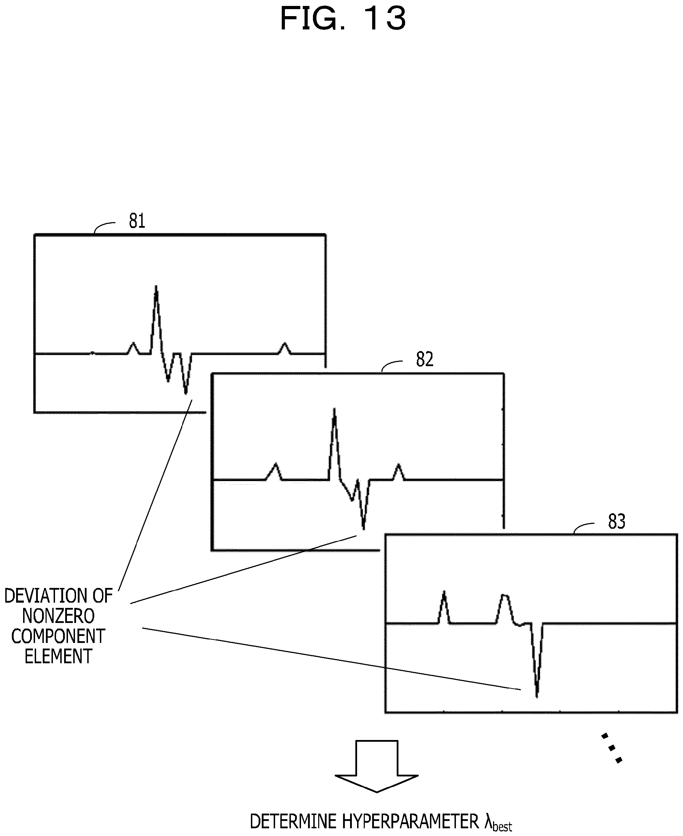

FIG. 13 is a diagram illustrating exemplary cross-validation based on the L0 regularization. For example, it is assumed that the leave-one-out cross validation is carried out on the basis of the observation spectrum 80 illustrated in FIG. 11. In this case, the L0 regularization is performed 17 times for each candidate value of the hyperparameter $\lambda$. Then, the candidate value of the hyperparameter $\lambda$ when the average of the generalization errors of the 17 times L0 regularization is minimized is to be the hyperparameter $\lambda_{best}$.

FIG. 13 illustrates the values (regression coefficients) of the components of the coefficient matrix x for each L0 regularization with the hyperparameter $\lambda_{best}$ by graphs 81, 82, 83, and so on. The horizontal axis of the graphs 81, 82, 83, and so on represents an element number, and the vertical axis represents a component value. In the coefficient matrix x generated for each L0 regularization, the position (element number) of the element with the nonzero component is deviated. If such positional deviation of the element with the nonzero component is left as it is, it may cause a decrease in accuracy of the finally generated model.

The positional deviation of the element with the nonzero component may be confirmed by a histogram of the element component value.

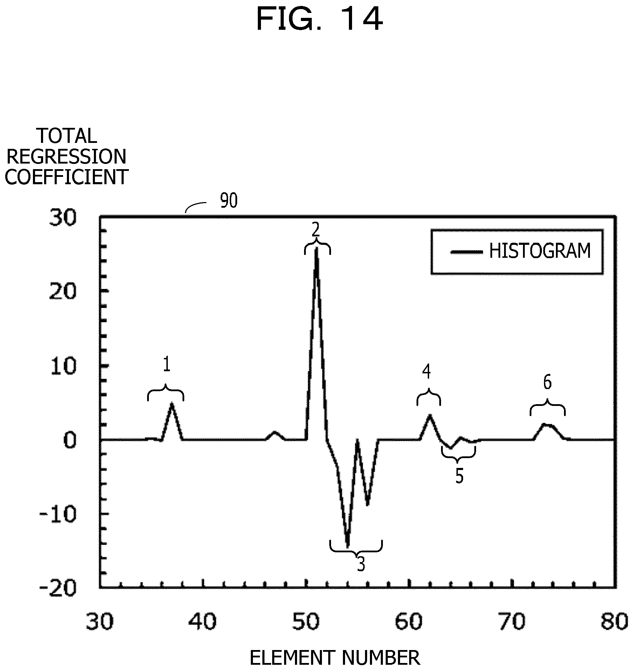

FIG. 14 is a diagram illustrating an exemplary histogram of a total regression coefficient of a coefficient matrix. FIG. 14 illustrates a histogram 90 generated on the basis of a plurality of coefficient matrixes x generated by 17 times L0 regularization with the hyperparameter $\lambda_{best}$. In the histogram 90, the horizontal axis represents an element number, and the vertical axis represents a total regression coefficient. The total regression coefficient in the histogram 90 is a value obtained by adding the regression coefficients included in the plurality of coefficient matrixes x for each element.

It is possible to detect consecutive elements of nonzero components from the histogram 90. In the example of FIG. 14, the consecutive elements of nonzero components are present at six points. With the elements of the observation matrix A corresponding to the consecutive elements of nonzero components in the coefficient matrix x combined into one, the reconstructed observation matrix $A_1$ in which the positional deviation of the elements of nonzero components is canceled is generated.

FIG. 15 is a flowchart (2/2) illustrating an exemplary procedure of the model generation process based on the L0 regularization. Hereinafter, a process illustrated in FIG. 15 will be described in accordance with step numbers.

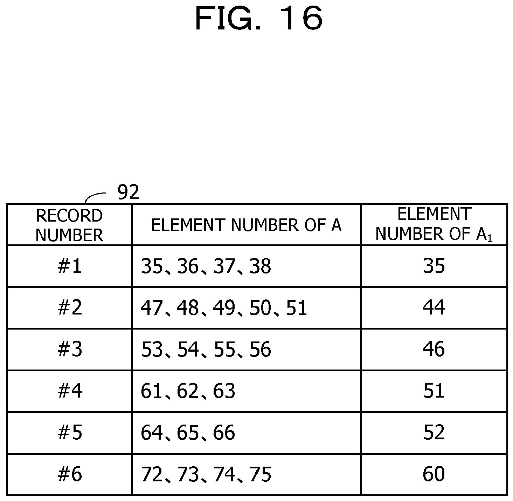

[Step S121] The reconstruction unit 130 generates the reconstructed observation matrix $A_1$. Details of the generation process of the reconstructed observation matrix $A_1$ will be described later (see FIG. 16). The reconstructed observation matrix $A_1$ is a matrix in which adjacent elements that are nonzero components and whose sign of the regression coefficient is not inverted in the histogram are weighted by the regression coefficient and are combined into one element.

[Step S122] The cross-validation unit 120 executes the process of steps S123 to S124 for each of p (p is a natural number) candidate values (hyperparameter $\lambda'_{j'}$) of the hyperparameter $\lambda$. For example, the cross-validation unit 120 counts up the value of j' by 1 in order from 1, and loops the process of steps S123 to S124 until j' becomes p.

[Step S123] The cross-validation unit 120 executes the cross-validation process of the L0 regularization using the hyperparameter $\lambda'_{j'}$. Details of the cross-validation process are similar to those in the process illustrated in FIG. 12. However, the observation matrix $A_D$ generated in step S113 is obtained by deleting the row of the sample corresponding to the validation data from the reconstructed observation matrix $A_1$ generated in step S121. Furthermore, the coefficient matrix x estimated in step S116 is a vector with components of the number same as the number $N_1$ of elements (number of columns) of each sample in the reconstructed observation matrix $A_1$. The coefficient matrix x for each data set is obtained by the cross-validation process.

[Step S124] The cross-validation unit 120 evaluates a generalization error of the coefficient matrix. For example, the cross-validation unit 120 calculates the average value of the root mean squared error or the mean absolute error of each of the plurality of models generated in the cross-validation.

[Step S125] When the cross-validation unit 120 has completed the cross-validation for all the candidate values of the hyperparameter $\lambda'$, the process proceeds to step S126. For example, in a case of j' = p, the cross-validation unit 120 determines that the cross-validation is complete for all the candidate values.

[Step S126] The cross-validation unit 120 determines the candidate value with the smallest generalization error among the candidate values of the hyperparameter $\lambda'$ as a hyperparameter $\lambda'_{best}$ to be adopted.

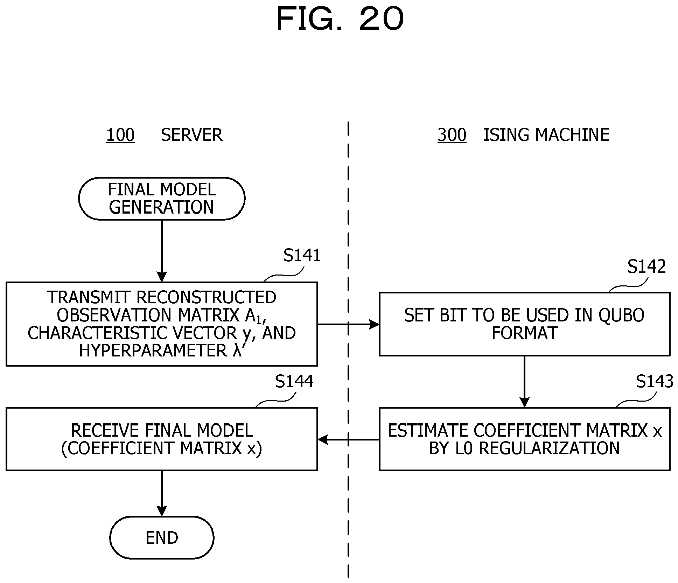

[Step S127] The model generation unit 140 carries out a final model generation process. A final model is generated by the L0 regularization using the Ising machine 300. The L0 regularization at the time of final model generation is performed on the basis of the observation matrix $A_1$, the characteristic vector y, and the hyperparameter $\lambda'_{best}$. Details of the final model generation process will be described later (see FIG. 20).

[Step S128] The model generation unit 140 outputs the final model, the reconstructed observation matrix $A_1$, and an element correspondence table. The element correspondence table indicates a correspondence relationship between the elements of the observation matrix A and the reconstructed observation matrix $A_1$. In a case of predicting characteristics of a sample using the final model, it is sufficient if the elements of the X-ray absorption spectrum data of the sample are converted on the basis of the element correspondence table.

FIG. 16 is a diagram illustrating an exemplary element correspondence table. In an element correspondence table 92, one or more records indicating a correspondence relationship between a plurality of element numbers of the observation matrix A and one element number of the reconstructed observation matrix $A_1$ are registered. Each record is provided with fields for a record number, an element number of A, and an element number of $A_1$.

In the record number field, identification numbers assigned in ascending order from "1" are set. In the field for the element number of A, element numbers of a plurality of consecutive elements to be combined into one element among the elements of the observation matrix A are set. In the field for the element number of $A_1$, element numbers of elements in the reconstructed observation matrix $A_1$ obtained by combining a plurality of elements in the observation matrix A are set.

For example, the first record in the element correspondence table 92 indicates that four elements of the element numbers "35" to "38" in the observation matrix A correspond to one element of the element number "35" in the reconstructed observation matrix $A_1$.

Note that, when a plurality of elements in the observation matrix A is combined, an element number of each element having the element number larger than that of the combined element is moved up by the number of elements reduced by the combining. For example, elements of the element numbers "39 to 46" in the observation matrix A becomes elements of the element numbers "36 to 43" in the reconstructed observation matrix $A_1$, respectively.

Next, the generation process of the reconstructed observation matrix $A_1$ will be described in detail.

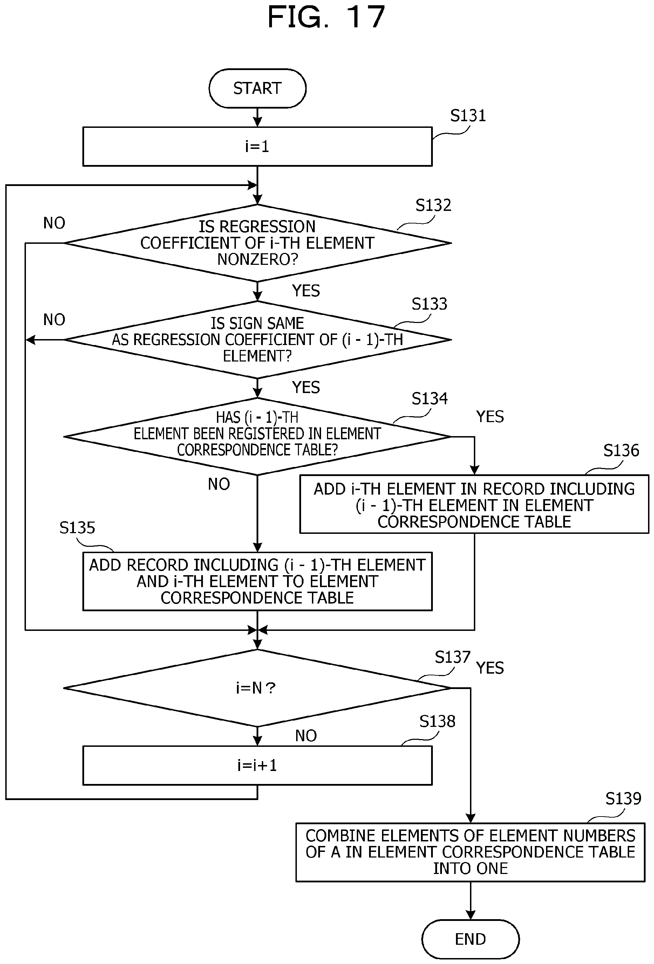

FIG. 17 is a flowchart illustrating an exemplary procedure of the process of generating the reconstructed observation matrix. Hereinafter, a process illustrated in FIG. 17 will be described in accordance with step numbers.

[Step S131] The reconstruction unit 130 sets an initial value "1" in a variable i.

[Step S132] The reconstruction unit 130 determines whether or not the regression coefficient of the i-th element is a nonzero component. If the regression coefficient is a nonzero component, the reconstruction unit 130 advances the process to step S133. Furthermore, if the regression coefficient is zero, the reconstruction unit 130 advances the process to step S137.

[Step S133] The reconstruction unit 130 determines whether or not the sign of the regression coefficient of the i-th element is the same as the sign of the regression coefficient of the (i - 1)-th element. If the signs are the same, the reconstruction unit 130 advances the process to step S134. Furthermore, if the signs do not match, the reconstruction unit 130 advances the process to step S137. Note that, if i = 1, there is no (i - 1)-th element to be compared, and the reconstruction unit 130 considers the codes do not match and advances the process to step S137.

[Step S134] The reconstruction unit 130 determines whether or not the (i - 1)-th element has been registered in the element correspondence table. If it has been registered, the reconstruction unit 130 advances the process to step S135. Furthermore, if it has not been registered, the reconstruction unit 130 advances the process to step S136.

[Step S135] The reconstruction unit 130 adds a new record to the element correspondence table. In the field for the element number of A of the added record, the element numbers of the (i - 1)-th element and i-th element are set. In addition, in the field for the element number of $A_1$ of the added record, a value obtained by adding 1 to the total of the number of elements not having been subject to the synthesis and the number of elements generated by the synthesis among the elements up to the i-th element is set.

For example, in a case of generating the first record in the element correspondence table 92 illustrated in FIG. 16, the number of elements not having been subject to the synthesis among the elements up to the i-th (36th) element is "34". In addition, the number of elements generated by the synthesis is "0". Accordingly, the element number of $A_1$ of the first record is "35", which is a value obtained by adding "1" to "34 + 0".

Furthermore, in a case of generating the second record in the element correspondence table 92, the number of elements not having been subject to the synthesis among the elements up to the i-th (48th) element is "42". In addition, the number of elements generated by the synthesis is "1". Accordingly, the element number of $A_1$ of the second record is "44", which is a value obtained by adding "1" to "42 + 1".

After adding the record to the element correspondence table 92, the reconstruction unit 130 advances the process to step S137.

[Step S136] The reconstruction unit 130 adds the element number of the i-th element in the field for the element number of A of the record including the (i - 1)-th element in the element correspondence table.

[Step S137] The reconstruction unit 130 determines whether or not i = N has been satisfied. If i = N, the reconstruction unit 130 advances the process to step S139. Furthermore, if i < N, the reconstruction unit 130 advances the process to step S138.

[Step S138] The reconstruction unit 130 counts up the value of the variable i (i = i + 1), and advances the process to step S132.

[Step S139] The reconstruction unit 130 combines, for each record in the element correspondence table 92, the feature amounts of the plurality of elements (elements to be synthesized) indicated by the element numbers of A into one. For example, the reconstruction unit 130 weights the respective feature amounts of the elements to be synthesized in the observation matrix with the corresponding regression coefficients, and totals the weighted values of the elements to be synthesized. Next, the reconstruction unit 130 divides the total value by the total of the respective regression coefficients of the elements to be synthesized. The reconstruction unit 130 sets a result of the division as a feature amount of the synthesized element in the reconstructed observation matrix $A_1$.

The feature amount of the element in the reconstructed observation matrix $A_1$ obtained by synthesizing the relevant elements in the observation matrix A is expressed by the following expression.

[Numeral 2]

$$\frac{\sum_n (I_n \times \bar{x}_n)}{\sum_n \bar{x}_n} \qquad (2)$$

Here, $I_n$ represents a numerical value of a spectrum of the n-th element (n is an element number of an element to be synthesized). An average value of a plurality of regression coefficients of the n-th element obtained by the cross-validation using the hyperparameter $\lambda_{best}$ is represented by $x_n$ (x is overlined). This calculation is performed for each sample in the observation matrix A. In addition, this calculation is performed on the elements of the element numbers of A indicated in the record in the element correspondence table 92. In the expression (2), n takes a value set in the element number of A of the record. The value obtained by the calculation of the expression (2) is to be the value of the spectrum of the element in the reconstructed observation matrix $A_1$ indicated by the element number of $A_1$ of the record in the element correspondence table 92. In this manner, the reconstructed observation matrix $A_1$ is generated.

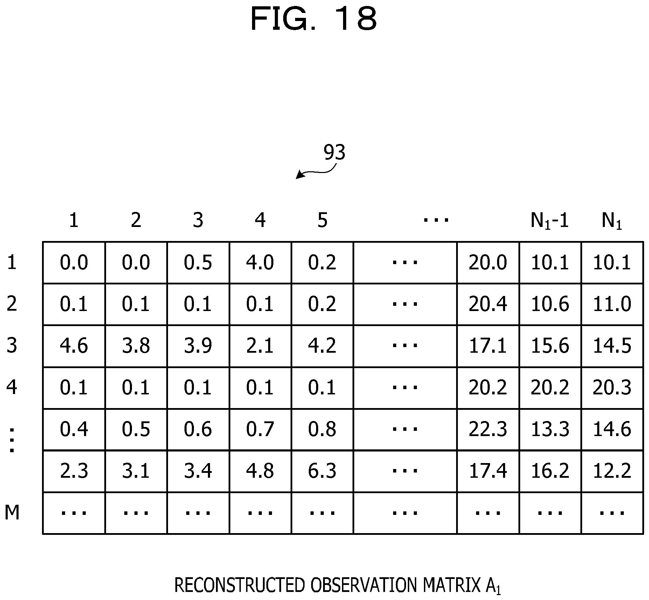

FIG. 18 is a diagram illustrating an exemplary reconstructed observation matrix. FIG. 18 illustrates a table 93 of component values of the reconstructed observation matrix $A_1$. Each row of the table 93 corresponds to a sample. Each column of the table 93 corresponds to an element of the observation spectrum. At an intersection of a row and a column of the table 93, a spectral value for the element corresponding to the column of the sample corresponding to the row is set.

In the reconstructed observation matrix $A_1$, the number of elements is $N_1$ ($N_1 < N$). In addition, the value of the element generated by the element synthesis is a value calculated by the expression (2).

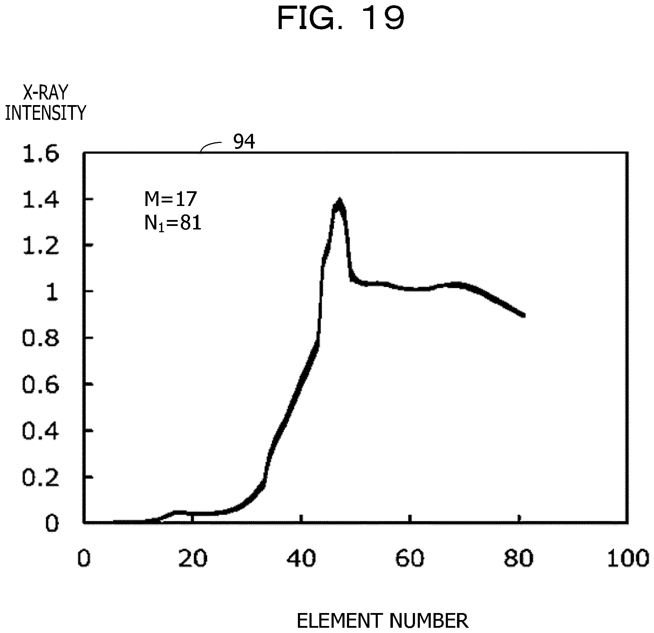

FIG. 19 is a diagram illustrating an exemplary observation spectrum indicated in the reconstructed observation matrix. An observation spectrum 94 of FIG. 19 is generated by combining the consecutive elements of nonzero components in the coefficient matrix x with respect to the observation spectrum 80 illustrated in FIG. 11. While the number of elements N is "100" in the observation spectrum 80, the number of elements $N_1$ is "81" in the observation spectrum 94, which indicates that the size is reduced by approximately 20%. With the number of elements reduced, the bit scale at the time of solving the L0 regularization with the Ising machine 300 is reduced by approximately 20%.

Next, a procedure of the final model generation process using the reconstructed observation matrix $A_1$ will be described in detail.

FIG. 20 is a flowchart illustrating an exemplary procedure of the final model generation process. Hereinafter, a process illustrated in FIG. 20 will be described in accordance with step numbers.

[Step S141] The model generation unit 140 transmits, to the control device 200, the reconstructed observation matrix $A_1$, the characteristic vector y, and the hyperparameter $\lambda'$. Then, the control device 200 controls the Ising machine 300 on the basis of the received information, and optimizes the coefficient matrix x.

[Step S142] The Ising machine 300 sets the initial value of the bit used in the L0 regularization formula in the QUBO format in the neuron circuit of each bit under the control of the control device 200. Furthermore, the Ising machine 300 sets, in the neuron circuit, information such as a weighting coefficient indicating whether or not the neuron circuits are connected to each other on the basis of the formula to be solved.

[Step S143] The Ising machine 300 estimates the coefficient matrix x by the L0 regularization. The Ising machine 300 transmits the optimized coefficient matrix x to the server 100 via the control device 200.

[Step S144] The model generation unit 140 of the server 100 receives, from the Ising machine 300, the coefficient matrix x as an optimized model. The received coefficient matrix x is to be the final model.

In this manner, prediction accuracy of the characteristic value is improved in the model generated on the basis of the reconstructed observation matrix as compared with the model generated without the reconstruction of the observation spectrum.

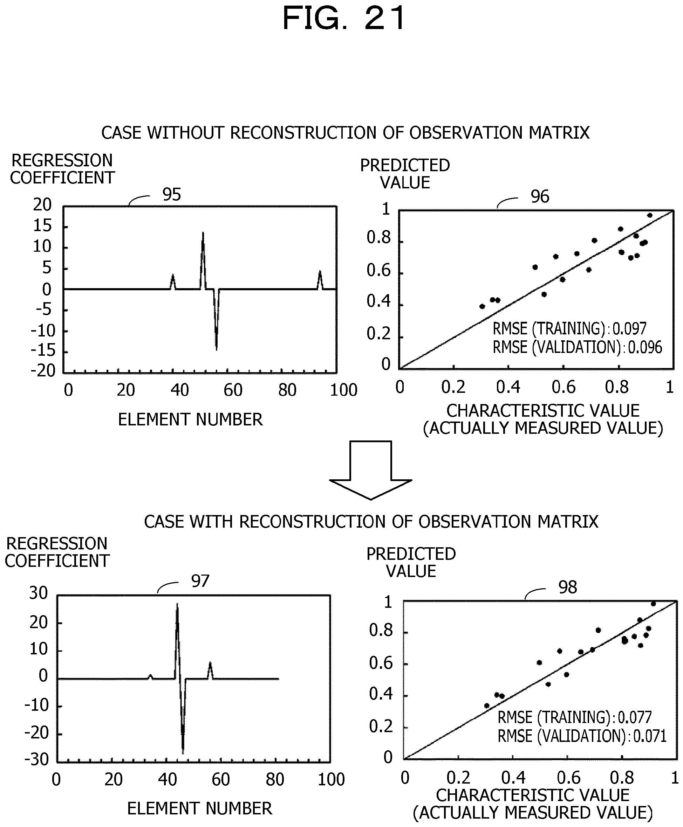

FIG. 21 is a diagram illustrating a difference in model accuracy depending on the presence or absence of the observation vector reconstruction. The upper part of FIG. 21 illustrates the accuracy of the final model in a case where the final model is generated without performing the reconstruction of the observation matrix. The lower part of FIG. 21 illustrates the accuracy of the final model in a case where the reconstruction of the observation matrix is performed to generate the final model.

Graphs 95 and 97 on the left side indicate the regression coefficient of each element of the generated coefficient matrix. The horizontal axis of the graphs 95 and 97 represents an element number, and the vertical axis represents a regression coefficient. Graphs 96 and 98 on the right side indicate an error between a characteristic value (actually measured value) of each component of the characteristic vector y and a predicted value of each component of the characteristic vector y predicted using the generated coefficient matrix. The error is the root mean squared error (RMSE). The error includes the RMSE for the error for the training data with respect to the 17 training data used in the regularization learning and the RMSE for the validation data.

In a case where the final model is generated without performing the reconstruction of the observation vector matrix, the RMSE for the training data is "0.097", and the RMSE for the validation data is "0.096". On the other hand, in a case where the reconstruction of the observation vector matrix is performed to generate the final model, the RMSE for the training data is "0.077", and the RMSE for the validation data is "0.071".

As illustrated in the graphs 95 and 97 on the left side, with the reconstruction of the observation vector matrix performed, the number of elements of the L0 regularization is reduced by 20%. Therefore, the number of bits used by the Ising machine 300 at the time of final model generation is also reduced by approximately 20%. Furthermore, as illustrated in the graphs 96 and 98, with the reconstruction of the observation vector matrix performed, the model accuracy is also improved.

[Third Embodiment]

Next, a third embodiment will be described. The third embodiment further reduces the number of elements by synthesizing also consecutive elements of zero components. Hereinafter, differences of the third embodiment from the second embodiment will be described.

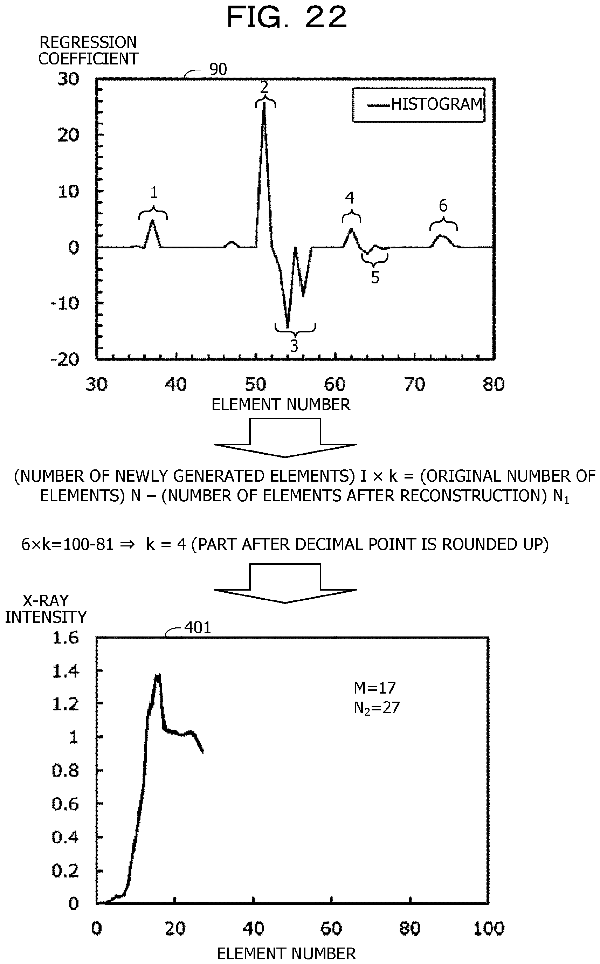

FIG. 22 is a diagram illustrating exemplary reconstruction of an observation matrix according to the third embodiment. FIG. 22 illustrates an exemplary case of reconstructing the observation matrix A based on the observation spectrum 80 according to the second embodiment illustrated in FIG. 11.

In the third embodiment, a reconstruction unit 130 combines not only a plurality of consecutive elements of nonzero components but also a plurality of consecutive elements of zero components into one element. For example, in a case where resolution of an input analysis spectrum is too high, an element of a coefficient matrix x closely related to a characteristic vector y may span a plurality of adjacent elements. Accordingly, in the second embodiment, the reconstruction unit 130 generates an element obtained by combining adjacent spectral elements with the histogram of the coefficient matrix x generated by the cross-validation used as weighting. As a result, a new observation matrix $A_1$ is generated. The Ising machine 300 solves the L0 regularization using the observation matrix $A_1$, whereby saving of the number of bits and improvement of the model accuracy are expected. In other words, for example, this work corresponds to compressing the spectrum not to lose the characteristics closely related to the characteristic vector y included in the original observation spectrum. While the second embodiment focuses only the elements in which a nonzero component appears as a histogram, it is possible to compress the spectrum by combining a plurality of elements for other elements as well.

For example, the reconstruction unit 130 determines an index k for performing compression to the extent that the characteristics included in the original observation spectrum are not lost on the basis of the number of elements I newly generated by combining the elements, the number of elements N of the original observation matrix A, and the number of elements $N_1$ of the reconstructed observation matrix $A_1$. For example, k may be obtained by the following formula. $I \times k = N - N_1$ ...(3)

The reconstruction unit 130 calculates k on the basis of the formula (3). The reconstruction unit 130 rounds up the part after the decimal point of k. In the example of FIG. 22, the number of elements I newly generated by combining the elements is "6". Furthermore, the number of elements N of the original observation matrix A is "100". Moreover, the number of elements $N_1$ of the reconstructed observation matrix $A_1$ is "81". In this case, the formula (3) is "$6 \times k = 100 - 81 = 19$". When k is solved, "k = 3.166". When the part after the decimal point is rounded up, k = 4. This means that the newly generated element is a collection of approximately four on average. For example, by combining four consecutive elements of zero components into one element, it is possible to combine the consecutive elements of zero components with a degree of compression similar to the degree of compression of the consecutive elements of nonzero components.

In view of the above, the reconstruction unit 130 combines four adjacent elements on average into one element in the element whose regression coefficient is zero in the histogram obtained by the cross-validation. As a result, the number of elements $N_2$ is 27 in an observation spectrum 401. In this case, the bit scale used by the Ising machine 300 at the time of solving the L0 regularization may be reduced by approximately 75%.

A first half (1/2) of a model generation process based on L0 regularization according to the third embodiment is similar to that of the second embodiment illustrated in FIG. 10. A latter half (2/2) of the model generation process based on the L0 regularization is different from that of the second embodiment.

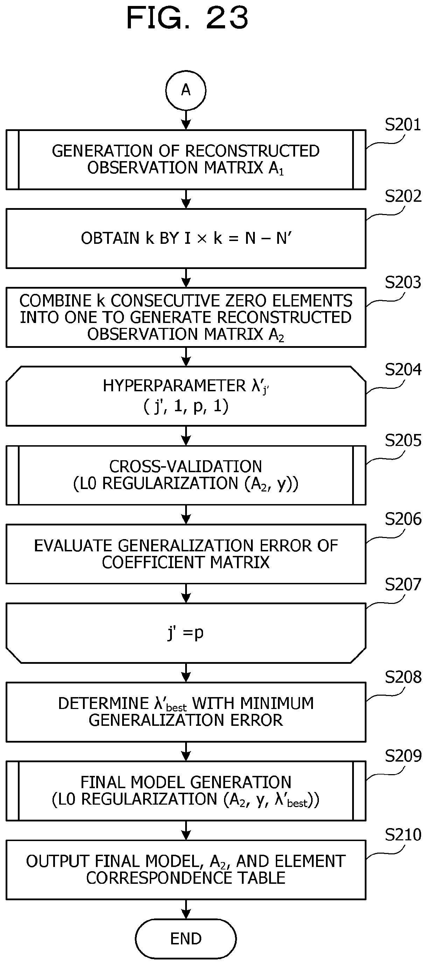

FIG. 23 is a flowchart illustrating an exemplary procedure of the model generation process based on the L0 regularization according to the third embodiment. A process illustrated in FIG. 23 is executed following the process of the second embodiment illustrated in FIG. 10. In the process illustrated in FIG. 23, processing of steps S201 and S203 to S210 is similar to the processing of steps S121 to S128 according to the second embodiment illustrated in FIG. 15. However, the reconstructed observation matrix $A_1$ used for the L0 regularization is replaced with a reconstructed observation matrix $A_2$ generated in step S203. Hereinafter, the processing of steps S202 to S203 different from that in the second embodiment will be described.

[Step S202] The reconstruction unit 130 obtains a value of k on the basis of the formula (3).

[Step S203] The reconstruction unit 130 selects k consecutive elements of zero components as elements to be synthesized in the histogram of the coefficient matrix generated in step S107. The reconstruction unit 130 combines the selected elements to be synthesized in the reconstructed observation matrix $A_1$ into one element. The value of the feature amount of the element after the combining is, for example, the average of the feature amounts of the elements to be synthesized. As a result, the reconstructed observation matrix $A_2$ is generated in which k consecutive elements of zero components are also combined into one.

At this time, the reconstruction unit 130 sets a correspondence relationship between the elements of the observation matrix A and the elements of the reconstructed observation matrix $A_2$ in an element correspondence table having a configuration similar to that of the element correspondence table 92 illustrated in FIG. 16. Note that, in the element correspondence table for the reconstructed observation matrix $A_2$, the element number of the reconstructed observation matrix $A_2$ is set instead of the element number of the reconstructed observation matrix $A_1$ in the element correspondence table 92.

With the number of elements of the observation matrix reduced in this manner, it becomes possible to reduce the number of bits used by the Ising machine 300 in the L0 regularization. As a result, processing efficiency improves.

[Fourth Embodiment]

Next, a fourth embodiment will be described. The fourth embodiment deletes all elements of zero components. Hereinafter, differences of the fourth embodiment from the second embodiment will be described.

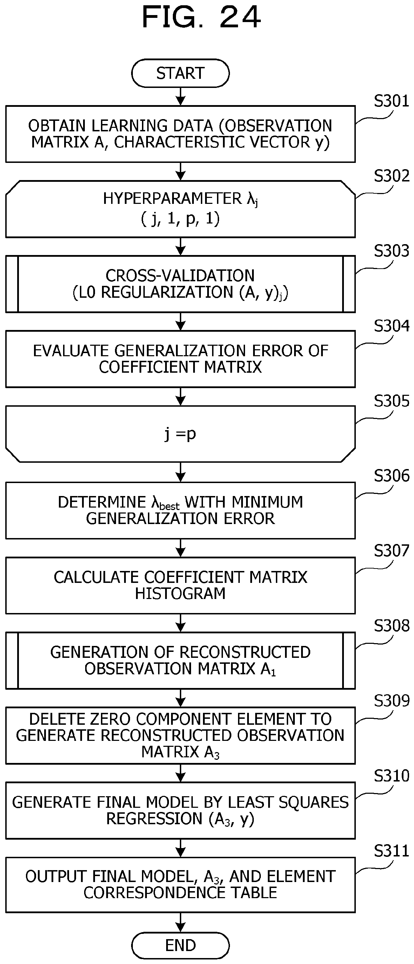

FIG. 24 is a flowchart illustrating an exemplary procedure of a model generation process based on L0 regularization according to the fourth embodiment. In the process illustrated in FIG. 24, processing of steps S301 to S307 is similar to the processing of steps S101 to S107 according to the second embodiment illustrated in FIG. 10. Processing of step S308 is similar to the processing of step S121 according to the second embodiment illustrated in FIG. 15. Hereinafter, a process of steps S309 to S311 different from that in the second embodiment will be described in accordance with step numbers.

[Step S309] A reconstruction unit 130 specifies elements of zero components in a histogram of a coefficient matrix generated in step S307. Then, the reconstruction unit 130 deletes the specified elements from the reconstructed observation matrix $A_1$, and generates a reconstructed observation matrix $A_3$. At this time, the reconstruction unit 130 generates an element correspondence table indicating a correspondence relationship between the elements of the reconstructed observation matrix $A_1$ and the elements of the reconstructed observation matrix $A_3$.

[Step S310] A model generation unit 140 generates a coefficient matrix x, which is the final model, by a least-square regression analysis based on the reconstructed observation matrix $A_3$ and a characteristic vector y.

[Step S311] The model generation unit 140 outputs the final model, the reconstructed observation matrix $A_3$, and the element correspondence table. The element correspondence table indicates a correspondence relationship between the elements of the observation matrix A and the reconstructed observation matrix $A_1$.

In this manner, it becomes possible to further compress the observation matrix A. The fourth embodiment is the same as the second embodiment up to the point that the histogram of the coefficient matrix at the optimum value of the hyperparameter $\lambda$ of the L0 regularization is calculated and adjacent elements that are nonzero and whose sign of the regression coefficient is not inverted are weighted by the histogram and are combined into one. In the fourth embodiment, the elements that have become zero in the histogram of the coefficient matrix are subsequently deleted from the observation matrix $A_1$, and a model is created using the observation matrix $A_3$ including only the newly generated elements.

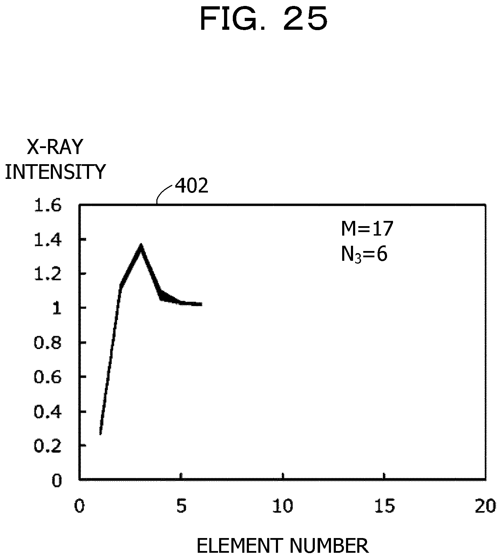

FIG. 25 is a diagram illustrating an exemplary observation spectrum in which all zero component elements are deleted. The element with a value of "0" in the histogram of the coefficient matrix is deleted from the reconstructed observation matrix $A_3$. As a result, the number of elements $N_3$ of an observation spectrum 402 represented by the reconstructed observation matrix $A_3$ is "6".

Normally, model generalization performance is maximized at the optimum value of the hyperparameter $\lambda$ of the L0 regularization. Accordingly, the number of newly generated elements is less than the number M of samples. Therefore, it is possible to consider that the element whose regression coefficient is "0" in the histogram of the cross-validation does not have a function of expressing the model. With the element whose regression coefficient is "0" in the histogram of the cross-validation deleted from the reconstructed observation matrix, it becomes possible to create the final model using the least-square regression without using the L0 regularization.

A calculation amount of a least-square regression problem is less than that of a combination optimization problem, and it is possible to execute calculation with a server 100, which is a classical computer, without using an Ising machine 300. For example, with the fourth embodiment applied, it becomes possible to improve efficiency of the model generation process.

[Other Embodiments]

While the Ising machine 300 including the neuron circuits 311, 312, ..., and 31n seeks for a solution to the combination optimization problem in the second to fourth embodiments, the same processing may be implemented by a von Neumann computer similar to the server 100. For example, the solution of the combination optimization problem may be sought for by reproducing the state transition process of quantum annealing by software simulation using a von Neumann computer. In that case, the server 100 may also seek for a solution to the combination optimization problem.

Furthermore, while the server 100 and the control device 200 are separated in the second to fourth embodiments, it is also possible to implement the functions of the control device 200 in the server 100.

Moreover, while the X-ray absorption spectrum data is used as the analytical data 111 in the second to fourth embodiments, it is also possible to use another type of data as the analytical data 111. For example, data indicating intensity of an X-ray spectrum for a predetermined time obtained by observing a lithium-ion battery in use for the corresponding time may be used as the analytical data 111.

In the second and third embodiments, the hyperparameter $\lambda'_{best}$ is determined again after generating the reconstructed observation matrix $A_1$. This is because the reconstruction of the observation matrix A exerts an effect of reducing the nonzero components in the coefficient matrix x, and the appropriate intensity of the penalty term in the L0 regularization may also change. For example, with the hyperparameter $\lambda'_{best}$ determined again, the accuracy of the final model improves. Meanwhile, in a case of giving priority to processing efficiency or the like, the hyperparameter $\lambda_{best}$ obtained earlier may also be used as the hyperparameter $\lambda$ in the final model generation process. With the hyperparameter $\lambda_{best}$ set as the hyperparameter $\lambda$ in the final model generation process, processing such as the cross-validation for determining the hyperparameter $\lambda'_{best}$ is made unnecessary, whereby it becomes possible to improve the processing efficiency.

The embodiments have been exemplified above, and the configuration of each unit described in the embodiments may be replaced with another configuration having a similar function. Furthermore, any other components and steps may also be added. Moreover, any two or more configurations (features) of the embodiments described above may also be combined.

**Claims**

1. A model generation program that causes at least one computer to execute a process, the process comprising:

   generating, by cross-validation of first L0 regularization learning, a plurality of first coefficient matrixes representing a relationship between a first observation matrix that has a feature obtained by observing a plurality of elements of each of a plurality of samples as a component and a characteristic vector that has a characteristic value of each of the plurality of samples as a component by a regression coefficient that corresponds to each of the plurality of elements;
   generating a histogram in which a plurality of total regression coefficients obtained by totaling the regression coefficient included in the plurality of first coefficient matrixes for each of the plurality of elements is arranged in order of element in the first observation matrix;
   generating a second observation matrix including a second element acquired by combining a plurality of first elements that corresponds to the adjacent total regression coefficients of nonzero in the histogram into one based on the first observation matrix; and
   generating a second coefficient matrix representing a relationship between the second observation matrix and the characteristic vector.

2. The model generation program according to claim 1, wherein the generating the second observation matrix includes:

   weighting each of components of the plurality of first elements by the corresponding total regression coefficient;
   totaling the weighted components for each of the plurality of samples; and
   generating a component of the second element of each of the plurality of samples based on a total value for each of the plurality of samples.

3. The model generation program according to claim 1 or 2, wherein the generating the plurality of first coefficient matrixes includes:

   performing the cross-validation of the first L0 regularization learning using each of a plurality of candidate values of a hyperparameter that indicates intensity of regularization in the first L0 regularization learning;
   selecting one of the plurality of candidate values based on accuracy of solution of the first L0 regularization learning according to each of the plurality of candidate values; and
   determining a plurality of coefficient matrixes generated by the cross-validation performed using the selected candidate value as the plurality of first coefficient matrixes.

4. The model generation program according to any one of claims 1 to 3, wherein the generating the second observation matrix includes:

   combining the plurality of first elements into one second element based on the first observation matrix; and
   generating the second observation matrix by combining a plurality of third elements that corresponds to the adjacent total regression coefficients of zero in the histogram into one fourth element.

5. The model generation program according to claim 4, wherein the generating the second observation matrix includes: determining a number of the plurality of third elements to be combined into the fourth element based on a number of the plurality of first elements combined into the second element.

6. The model generation program according to any one of claims 1 to 5, wherein the generating the second coefficient matrix includes generating the second coefficient matrix by second L0 regularization learning.

7. The model generation program according to any one of claims 1 to 3, wherein the generating the second observation matrix includes:

   combining the plurality of first elements into one second element based on the first observation matrix; and
   deleting the element that corresponds to the total regression coefficient of zero based on the first observation matrix.

8. The model generation program according to claim 7, wherein the generating the second coefficient matrix includes generating the second coefficient matrix by a least squares method.

**9.** A model generation method for a computer to execute a process comprising:

generating, by cross-validation of first L0 regularization learning, a plurality of first coefficient matrixes representing a relationship between a first observation matrix that has a feature obtained by observing a plurality of elements of each of a plurality of samples as a component and a characteristic vector that has a characteristic value of each of the plurality of samples as a component by a regression coefficient that corresponds to each of the plurality of elements;

generating a histogram in which a plurality of total regression coefficients obtained by totaling the regression coefficient included in the plurality of first coefficient matrixes for each of the plurality of elements is arranged in order of element in the first observation matrix;

generating a second observation matrix including a second element acquired by combining a plurality of first elements that corresponds to the adjacent total regression coefficients of nonzero in the histogram into one based on the first observation matrix; and

generating a second coefficient matrix representing a relationship between the second observation matrix and the characteristic vector.

**10.** The model generation method according to claim 9, wherein the generating the second observation matrix includes:

weighting each of components of the plurality of first elements by the corresponding total regression coefficient;

totaling the weighted components for each of the plurality of samples; and

generating a component of the second element of each of the plurality of samples based on a total value for each of the plurality of samples.

**11.** The model generation method according to claim 9 or 10, wherein the generating the plurality of first coefficient matrixes includes:

performing the cross-validation of the first L0 regularization learning using each of a plurality of candidate values of a hyperparameter that indicates intensity of regularization in the first L0 regularization learning;

selecting one of the plurality of candidate values based on accuracy of solution of the first L0 regularization learning according to each of the plurality of candidate values; and

determining a plurality of coefficient matrixes generated by the cross-validation performed using the selected candidate value as the plurality of first coefficient matrixes.

**12.** An information processing apparatus comprising:
a control unit configured to:

generate, by cross-validation of first L0 regularization learning, a plurality of first coefficient matrixes representing a relationship between a first observation matrix that has a feature obtained by observing a plurality of elements of each of a plurality of samples as a component and a characteristic vector that has a characteristic value of each of the plurality of samples as a component by a regression coefficient that corresponds to each of the plurality of elements,

generate a histogram in which a plurality of total regression coefficients obtained by totaling the regression coefficient included in the plurality of first coefficient matrixes for each of the plurality of elements is arranged in order of element in the first observation matrix,

generate a second observation matrix including a second element acquired by combining a plurality of first elements that corresponds to the adjacent total regression coefficients of nonzero in the histogram into one based on the first observation matrix, and

generate a second coefficient matrix representing a relationship between the second observation matrix and the characteristic vector.

**13.** The information processing apparatus according to claim 12, wherein the control unit is further configured to:

weight each of components of the plurality of first elements by the corresponding total regression coefficient,

total the weighted components for each of the plurality of samples, and

generating a component of the second element of each of the plurality of samples based on a total value for each of the plurality of samples.

**14.** The information processing apparatus according to claim 12 or 13, wherein the control unit is further configured to:

perform the cross-validation of the first L0 regularization learning using each of a plurality of candidate values of a hyperparameter that indicates intensity of regularization in the first L0 regularization learning, select one of the plurality of candidate values based on accuracy of solution of the first L0 regularization learning according to each of the plurality of candidate values, and determine a plurality of coefficient matrixes generated by the cross-validation performed using the selected candidate value as the plurality of first coefficient matrixes.

# FIG. 1

INFORMATION PROCESSING APPARATUS ~ 10

STORAGE UNIT 11

| ELEMENT / SAMPLE | 1 | 2 | 3 | $\cdots$ | N |
|---|---|---|---|---|---|
| a | 0.0 | 0.0 | 0.5 | $\cdots$ | 10.1 |
| b | 0.1 | 0.1 | 0.1 | $\cdots$ | 11.0 |
| $\cdots$ | $\cdots$ | $\cdots$ | $\cdots$ | $\cdots$ | $\cdots$ |

11a

11b

| SAMPLE | CHARACTERISTIC VALUE |
|---|---|
| a | $y_a$ |
| b | $y_b$ |
| $\cdots$ | $\cdots$ |

12

**GENERATE MODEL FORMULA**

$$\begin{pmatrix} 0.0 & 0.0 & 0.5 & \cdots & 10.1 \\ 0.1 & 0.1 & 0.1 & \cdots & 11.0 \\ \cdots & \cdots & \cdots & \cdots & \cdots \end{pmatrix} \begin{pmatrix} x_1 \\ x_2 \\ \vdots \\ x_n \end{pmatrix} = \begin{pmatrix} y_a \\ y_b \\ \cdots \end{pmatrix}$$

FIRST OBSERVATION MATRIX A    FIRST COEFFICIENT MATRIX x    CHARACTERISTIC VECTOR y

**APPLY L0 REGULARIZATION AND PERFORM CROSS-VALIDATION**

REGRESSION COEFFICIENT

CROSS-VALIDATION 1    CROSS-VALIDATION 2    $\cdots$

**GENERATE HISTOGRAM**

TOTAL REGRESSION COEFFICIENT

12a

COMBINE NONZERO ELEMENTS INTO ONE

**GENERATE SECOND OBSERVATION MATRIX**

FIRST OBSERVATION MATRIX A

ELEMENT NUMBER   N

SECOND OBSERVATION MATRIX A'

ELEMENT NUMBER   N'

**APPLY L0 REGULARIZATION AND GENERATE SECOND COEFFICIENT MATRIX x' A'x'=y**

# FIG. 2

# FIG. 3

SERVER 100

101 PROCESSOR

104 GPU

21

22

102 MEMORY

105 INPUT INTERFACE

23

103 STORAGE DEVICE

106 OPTICAL DRIVE DEVICE

24

108 NETWORK INTERFACE

107 DEVICE CONNECTION INTERFACE

25

26

27

109

20 NETWORK

# FIG. 4

# FIG. 5

OBSERVATION MATRIX A (FEATURE AMOUNT)

COEFFICIENT MATRIX x

CHARACTERISTIC VECTOR y

EP 4 116 845 A1

# FIG. 6

:

HYPERPARAMETER λ = λ1 (CANDIDATE VALUE)

HYPERPARAMETER λ = λ0 (CANDIDATE VALUE)

ADOPT λ WHEN MODEL ACCURACY IS HIGHEST

# FIG. 7

CROSS-VALIDATION 1

65-1

COEFFICIENT
VALUE

ELEMENT NUMBER N

CROSS-VALIDATION 2

65-2

NONZERO ELEMENT AT TIME OF
CROSS-VALIDATION 1

CROSS-VALIDATION 3

65-3

NONZERO ELEMENT AT TIME OF
CROSS-VALIDATION 1

CROSS-VALIDATION m

65-m

NONZERO ELEMENT AT TIME OF
CROSS-VALIDATION 1

# FIG. 8

# FIG. 9

CROSS-VALIDATION RESULT AT TIME OF $\lambda_{best}$

$(1,2,\cdots,m)$  65-1

65-32

65-m

COEFFICIENT MATRIX
HISTOGRAM  71

COMBINE SPECTRAL
ELEMENTS INTO ONE

N

NEW OBSERVATION
MATRIX $A_1$

$N_1$

NEW NUMBER OF ELEMENTS $N_1$
< ORIGINAL NUMBER N

FINAL MODEL  72

$N_1$

# FIG. 10

START

↓

OBTAIN LEARNING DATA (OBSERVATION MATRIX A, CHARACTERISTIC VECTOR y) — S101

↓

HYPERPARAMETER $\lambda_j$
( j, 1, p, 1) — S102

↓

CROSS-VALIDATION
(L0 REGULARIZATION (A, y)) — S103

↓

EVALUATE GENERALIZATION ERROR OF COEFFICIENT MATRIX — S104

↓

j = p — S105

↓

DETERMINE $\lambda_{best}$ WITH MINIMUM GENERALIZATION ERROR — S106

↓

CALCULATE COEFFICIENT MATRIX HISTOGRAM — S107

↓

A

# FIG. 11

X-RAY ABSORPTION INTENSITY

M=17
N=100

ELEMENT NUMBER

# FIG. 12

CROSS-
VALIDATION

100   SERVER                                   300   ISING MACHINE

```
  ┌─────────────────┐
  │     CROSS-       │
  │   VALIDATION     │
  └─────────────────┘
            │
            ▼                    S111
  ┌─────────────────────────────┐
  │      DATA SET $D_k$          │
  │      ( k, 1, m, 1)           │
  └─────────────────────────────┘
            │
            ▼                    S112
  ┌─────────────────────────────┐
  │   DIVIDE X-RAY ABSORPTION    │
  │  SPECTRUM DATA INTO TRAINING │
  │  DATA AND VALIDATION DATA    │
  └─────────────────────────────┘
            │
            ▼                    S113
  ┌─────────────────────────────┐
  │ GENERATE OBSERVATION MATRIX $A_D$ │
  │ AND CHARACTERISTIC VECTOR y  │
  └─────────────────────────────┘
            │
            ▼                    S114                              S115
  ┌─────────────────────────────┐        ┌────────────────────────────┐
  │ TRANSMIT OBSERVATION MATRIX $A_D$, │──▶│  SET BIT TO BE USED IN QUBO │
  │ CHARACTERISTIC VECTOR y, AND │        │         FORMAT             │
  │   HYPERPARAMETER λ           │        └────────────────────────────┘
  └─────────────────────────────┘                      │
            │              S117                         ▼         S116
            ▼                             ┌────────────────────────────┐
  ┌─────────────────────────────┐◀────────│ ESTIMATE COEFFICIENT MATRIX x │
  │   RECEIVE ESTIMATED MODEL    │        │   BY L0 REGULARIZATION      │
  │  (COEFFICIENT MATRIX x)      │        └────────────────────────────┘
  └─────────────────────────────┘
            │              S118
            ▼
  ┌─────────────────────────────┐
  │ CALCULATE ERROR OF MODEL USING │
  │      VALIDATION DATA         │
  └─────────────────────────────┘
            │              S119
            ▼
  ┌─────────────────────────────┐
  │          k =m                │
  └─────────────────────────────┘
            │
            ▼
  ┌─────────────┐
  │     END     │
  └─────────────┘
```

# FIG. 13

81

82

83

DEVIATION OF
NONZERO
COMPONENT
ELEMENT

DETERMINE HYPERPARAMETER $\lambda_{best}$

# FIG. 14

# FIG. 15

( A )

RECONSTRUCTED OBSERVATION MATRIX $A_1$ GENERATION —— S121

HYPERPARAMETER $\lambda'_{j'}$ ( $j'$, 1, p, 1) —— S122

CROSS-VALIDATION (L0 REGULARIZATION ($A_1$, y)) —— S123

EVALUATE GENERALIZATION ERROR OF COEFFICIENT MATRIX —— S124

$j' = p$ —— S125

DETERMINE HYPERPARAMETER $\lambda'_{best}$ WITH MINIMUM GENERALIZATION ERROR —— S126

FINAL MODEL GENERATION (L0 REGULARIZATION ($A_1$, y, $\lambda'_{best}$)) —— S127

OUTPUT FINAL MODEL, $A_1$, AND ELEMENT CORRESPONDENCE TABLE —— S128

END

# FIG. 16

92

| RECORD NUMBER | ELEMENT NUMBER OF A | ELEMENT NUMBER OF $A_1$ |
|---|---|---|
| #1 | 35、36、37、38 | 35 |
| #2 | 47、48、49、50、51 | 44 |
| #3 | 53、54、55、56 | 46 |
| #4 | 61、62、63 | 51 |
| #5 | 64、65、66 | 52 |
| #6 | 72、73、74、75 | 60 |

# FIG. 17

START

S131

i=1

S132

IS REGRESSION COEFFICIENT OF i-TH ELEMENT NONZERO?

NO

YES

S133

IS SIGN SAME AS REGRESSION COEFFICIENT OF (i - 1)-TH ELEMENT?

NO

YES

S134

HAS (i - 1)-TH ELEMENT BEEN REGISTERED IN ELEMENT CORRESPONDENCE TABLE?

YES

NO

S136

ADD i-TH ELEMENT IN RECORD INCLUDING (i - 1)-TH ELEMENT IN ELEMENT CORRESPONDENCE TABLE

S135

ADD RECORD INCLUDING (i - 1)-TH ELEMENT AND i-TH ELEMENT TO ELEMENT CORRESPONDENCE TABLE

S137 YES

i=N ?

NO

S138

i=i+1

S139

COMBINE ELEMENTS OF ELEMENT NUMBERS OF A IN ELEMENT CORRESPONDENCE TABLE INTO ONE

END

# FIG. 18

93

|   | 1 | 2 | 3 | 4 | 5 | · · · | | $N_1-1$ | $N_1$ |
|---|---|---|---|---|---|---|---|---|---|
| 1 | 0.0 | 0.0 | 0.5 | 4.0 | 0.2 | · · · | 20.0 | 10.1 | 10.1 |
| 2 | 0.1 | 0.1 | 0.1 | 0.1 | 0.2 | · · · | 20.4 | 10.6 | 11.0 |
| 3 | 4.6 | 3.8 | 3.9 | 2.1 | 4.2 | · · · | 17.1 | 15.6 | 14.5 |
| 4 | 0.1 | 0.1 | 0.1 | 0.1 | 0.1 | · · · | 20.2 | 20.2 | 20.3 |
| ⋮ | 0.4 | 0.5 | 0.6 | 0.7 | 0.8 | · · · | 22.3 | 13.3 | 14.6 |
|   | 2.3 | 3.1 | 3.4 | 4.8 | 6.3 | · · · | 17.4 | 16.2 | 12.2 |
| M | · · · | · · · | · · · | · · · | · · · | · · · | · · · | · · · | · · · |

RECONSTRUCTED OBSERVATION MATRIX $A_1$

# FIG. 19

# FIG. 20

<u>100</u>  SERVER

<u>300</u>  ISING MACHINE

FINAL MODEL
GENERATION

S141

TRANSMIT RECONSTRUCTED
OBSERVATION MATRIX $A_1$,
CHARACTERISTIC VECTOR y, AND
HYPERPARAMETER $\lambda$

S142

SET BIT TO BE USED IN QUBO
FORMAT

S144

RECEIVE FINAL MODEL
(COEFFICIENT MATRIX x)

S143

ESTIMATE COEFFICIENT MATRIX x
BY L0 REGULARIZATION

END

# FIG. 21

CASE WITHOUT RECONSTRUCTION OF OBSERVATION MATRIX

CASE WITH RECONSTRUCTION OF OBSERVATION MATRIX

# FIG. 22

REGRESSION
COEFFICIENT

(NUMBER OF NEWLY GENERATED ELEMENTS) I × k = (ORIGINAL NUMBER OF ELEMENTS) N − (NUMBER OF ELEMENTS AFTER RECONSTRUCTION) $N_1$

$6 \times k = 100-81 \Rightarrow k = 4$ (PART AFTER DECIMAL POINT IS ROUNDED UP)

X-RAY INTENSITY

$M=17$
$N_2=27$

ELEMENT NUMBER

# FIG. 23

(A)

↓

GENERATION OF RECONSTRUCTED
OBSERVATION MATRIX $A_1$ — S201

↓

OBTAIN k BY I × k = N − N' — S202

↓

COMBINE k CONSECUTIVE ZERO ELEMENTS
INTO ONE TO GENERATE RECONSTRUCTED
OBSERVATION MATRIX $A_2$ — S203

↓

HYPERPARAMETER $\lambda'_{j'}$
( j', 1, p, 1) — S204

↓

CROSS-VALIDATION
(L0 REGULARIZATION ($A_2$, y)) — S205

↓

EVALUATE GENERALIZATION ERROR OF
COEFFICIENT MATRIX — S206

↓

j' = p — S207

↓

DETERMINE $\lambda'_{best}$ WITH MINIMUM
GENERALIZATION ERROR — S208

↓

FINAL MODEL GENERATION
(L0 REGULARIZATION ($A_2$, y, $\lambda'_{best}$)) — S209

↓

OUTPUT FINAL MODEL, $A_2$, AND ELEMENT
CORRESPONDENCE TABLE — S210

↓

END

# FIG. 24

```
                    ( START )
                        │
                        ▼
```

| | |
|---|---|
| OBTAIN LEARNING DATA (OBSERVATION MATRIX A, CHARACTERISTIC VECTOR y) | S301 |
| HYPERPARAMETER $\lambda_j$ ( j, 1, p, 1) | S302 |
| CROSS-VALIDATION (L0 REGULARIZATION $(A, y)_j$) | S303 |
| EVALUATE GENERALIZATION ERROR OF COEFFICIENT MATRIX | S304 |
| j = p | S305 |
| DETERMINE $\lambda_{best}$ WITH MINIMUM GENERALIZATION ERROR | S306 |
| CALCULATE COEFFICIENT MATRIX HISTOGRAM | S307 |
| GENERATION OF RECONSTRUCTED OBSERVATION MATRIX $A_1$ | S308 |
| DELETE ZERO COMPONENT ELEMENT TO GENERATE RECONSTRUCTED OBSERVATION MATRIX $A_3$ | S309 |
| GENERATE FINAL MODEL BY LEAST SQUARES REGRESSION $(A_3, y)$ | S310 |
| OUTPUT FINAL MODEL, $A_3$, AND ELEMENT CORRESPONDENCE TABLE | S311 |

```
                        │
                        ▼
                     ( END )
```

# FIG. 25

Europäisches
Patentamt

European
Patent Office

Office européen
des brevets

# EUROPEAN SEARCH REPORT

Application Number

EP 22 16 9037

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Hartmut Neven ET AL: "QBoost: Large Scale Classifier Training with Adiabatic Quantum Optimization", JMLR: Workshop and Conference Proceedings Asian Conference on Machine Learning, 4 November 2012 (2012-11-04), pages 333-348, XP055344107, Retrieved from the Internet: URL:http://www.jmlr.org/proceedings/papers/v25/neven12/neven12.pdf [retrieved on 2022-11-15] * page 335 - page 339 * | 1-14 | INV. G06F17/11 G06F30/00 G06N10/00 |
| A | HARTMUT NEVEN ET AL: "Training a Binary Classifier with the Quantum Adiabatic Algorithm", ARXIV.ORG, CORNELL UNIVERSITY LIBRARY, 201 OLIN LIBRARY CORNELL UNIVERSITY ITHACA, NY 14853, 4 November 2008 (2008-11-04), XP080439029, * sections 2-4 * | 1-14 | |
| A | US 2015/006443 A1 (ROSE GEORDIE [CA] ET AL) 1 January 2015 (2015-01-01) * paragraphs [0011], [0051], [0184] - paragraph [0367] * | 1-14 | TECHNICAL FIELDS SEARCHED (IPC) G06F G06N |
| A | TORU AONISHI ET AL: "L0 regularization-based compressed sensing with coherent Ising machines", ARXIV.ORG, CORNELL UNIVERSITY LIBRARY, 201 OLIN LIBRARY CORNELL UNIVERSITY ITHACA, NY 14853, 22 February 2021 (2021-02-22), XP081890326, * abstract * | 1-14 | |

-/--

The present search report has been drawn up for all claims

| Place of search | Date of completion of the search | Examiner |
|---|---|---|
| Berlin | 15 November 2022 | Virnik, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | EP 3 667 571 A1 (FUJITSU LTD [JP]) 17 June 2020 (2020-06-17) * the whole document * ----- | 1-14 | |

TECHNICAL FIELDS
SEARCHED     (IPC)

The present search report has been drawn up for all claims

| Place of search | Date of completion of the search | Examiner |
|---|---|---|
| Berlin | 15 November 2022 | Virnik, Elena |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

....................................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 16 9037

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2022

| Patent document cited in search report | | Publication date | Patent family member(s) | | Publication date |
|---|---|---|---|---|---|
| US 2015006443 | A1 | 01-01-2015 | CN | 105531725 A | 27-04-2016 |
| | | | CN | 108256651 A | 06-07-2018 |
| | | | EP | 3014534 A1 | 04-05-2016 |
| | | | JP | 6465876 B2 | 06-02-2019 |
| | | | JP | 6718994 B2 | 08-07-2020 |
| | | | JP | 2016531343 A | 06-10-2016 |
| | | | JP | 2019096334 A | 20-06-2019 |
| | | | US | 2015006443 A1 | 01-01-2015 |
| | | | US | 2017351974 A1 | 07-12-2017 |
| | | | WO | 2014210368 A1 | 31-12-2014 |
| EP 3667571 | A1 | 17-06-2020 | CN | 111310930 A | 19-06-2020 |
| | | | EP | 3667571 A1 | 17-06-2020 |
| | | | JP | 7131356 B2 | 06-09-2022 |
| | | | JP | 2020095397 A | 18-06-2020 |
| | | | US | 2020184375 A1 | 11-06-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020095397 A

- WO 2015064672 A